(19) Europäisches Patentamt / European Patent Office / Office européen des brevets

(11) **EP 2 755 058 B1**

(12) **EUROPEAN PATENT SPECIFICATION**

(45) Date of publication and mention of the grant of the patent:
**06.05.2020  Bulletin 2020/19**

(51) Int Cl.:
*G01V 1/36* *(2006.01)*      *G01V 1/34* *(2006.01)*

(21) Application number: **14150970.3**

(22) Date of filing: **13.01.2014**

(54) **Seismic data processing including true-azimuth three-dimensional internal multiple attenuation without subsurface information**

Verarbeitung seismischer Daten einschließlich Abschwächung azimutgetreuer dreidimensionaler interner Mehrfachreflektionen ohne Untergrundinformationen

Traitement de données sismiques comprenant l'atténuation tridimensionnelle de multiples internes sur azimut réel sans informations de subsurface

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **15.01.2013   US 201361752566 P**

(43) Date of publication of application:
**16.07.2014   Bulletin 2014/29**

(73) Proprietor: **CGG Services SAS**
**91300 Massy (FR)**

(72) Inventors:
 • **Hung, Barry**
  **91300 MASSY (FR)**
 • **Wang, Min**
  **91300 MASSY (FR)**

(74) Representative: **Ipsilon**
**Le Centralis**
**63, avenue du Général Leclerc**
**92340 Bourg-la-Reine (FR)**

(56) References cited:
 • ZHIMING JAMES WU, SONIKA, BILL DRAGOSET: "Robust internal multiple prediction algorithm", SEG SAN ANTONION 2011 ANNUAL MEETING, 2011, pages 3541-3545, XP002776382, San antonio
 • ANTONIO PICA, LAURIE DELMAS: "Wave equation based internal multiple modeling in 3D", SEG LAS VEGAS 2008 ANNUAL MEETING, 2008, pages 2476-2480, XP002776383, Las Vegas
 • BARRY HUNG, MIN WANG, MALCOLM GRIFFITHS: "True-azimuth 3D Internal Multiple Attenuation without subsurface information", 75TH EAGE CONF. & EXHIBITION INCORP. SPE EUROPEC 2013, 10 June 2013 (2013-06-10), - 13 June 2013 (2013-06-13), pages 1-5, XP002776384,
 • M.G. RETAILLEAU, N. BENJAMIN, A. PICA, M. BENDJABALLAH, P. PLASTERIE, S. LEROY, L. DELMAS, P. HUGONNET, A, KHALIL, GULUNAY, R. SMI: "Advanced 3D Land Internal Mutiple Modeling and subtraction, a WAZ Oman Case Study", 74TH EAGE CONF. & EXHIBITION INCORP. SPE EUROPEC 2012, Y014, 4 July 2012 (2012-07-04), - 7 July 2012 (2012-07-07), pages 1-5, XP002776385, copenhagen, Denmark

**Description**

**TECHNICAL FIELD**

The embodiments relate generally to land and marine seismic exploration and more specifically to systems and methods for implementation of a method of determining and then attenuation true azimuth internal multiples using the three-dimensional (3D) nature of earth's subsurface without *apriori* knowledge of multiple-generating interfaces.

**BACKGROUND**

A widely used technique for searching for oil or gas is the seismic exploration of subsurface geophysical structures. Reflection seismology is a method of geophysical exploration to determine the properties of a portion of a subsurface layer in the earth, which information is especially helpful in the oil and gas industry. Marine-based seismic data acquisition and processing techniques are used to generate a profile (image) of a geophysical structure (subsurface) of the strata underlying the seafloor. This profile does not necessarily provide an accurate location for oil and gas reservoirs, but it may suggest, to those trained in the field, the presence or absence of oil and/or gas reservoirs. Thus, providing an improved image of the subsurface in a shorter period of time is an ongoing process.

The seismic exploration process consists of generating seismic waves (i.e., sound waves) directed toward the subsurface area, gathering data on reflections of the generated seismic waves at interfaces between layers of the subsurface, and analyzing the data to generate a profile (image) of the geophysical structure, i.e., the layers of the investigated subsurface. This type of seismic exploration can be used both on the subsurface of land areas and for exploring the subsurface of the ocean floor.

Marine reflection seismology is based on the use of a controlled source that sends energy waves into the earth, by first generating the energy waves in or on the ocean. By measuring the time it takes for the reflections to come back to one or more receivers (usually very many, perhaps in the order of several dozen, or even hundreds), it is possible to estimate the depth and/or composition of the features causing such reflections. These features may be associated with subterranean hydrocarbon deposits.

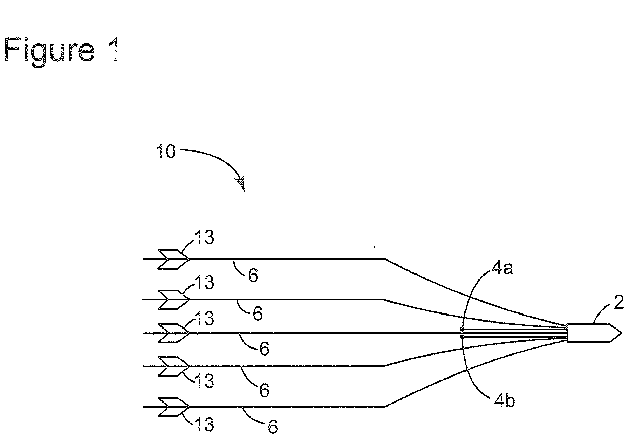

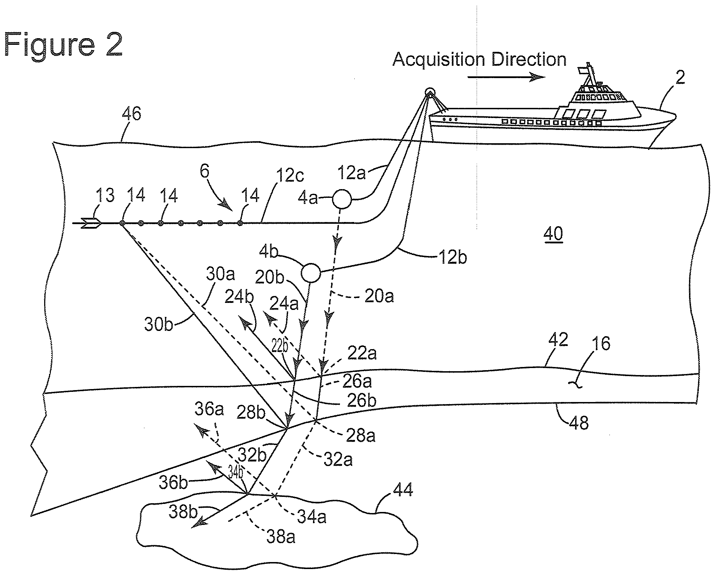

For a seismic gathering process, as shown in Figure 1, a data acquisition system 10 includes a ship 2 towing plural streamers 6 that may extend over kilometers behind ship 2. Each of the streamers 6 can include one or more birds 13 that maintains streamer 6 in a known fixed position relative to other streamers 6, and the birds 13 are capable of moving streamer 6 as desired according to bi-directional communications birds 13 can receive from ship 2. One or more source arrays 4a,b may be also towed by ship 2 or another ship for generating seismic waves. Source arrays 4a,b can be placed either in front of or behind receivers 14 (shown in Figure 2), or both behind and in front of receivers 14. The seismic waves generated by source arrays 4a,b propagate downward, reflect off of, and penetrate the seafloor, wherein the refracted waves eventually are reflected by one or more reflecting structures (not shown in Figure 1) back to the surface (see Figure 2, discussed below). The reflected seismic waves propagate upwardly and are detected by receivers 14 provided on streamers 6. This process is generally referred to as "shooting" a particular seafloor area, and the seafloor area can be referred to as a "cell".

Figure 2 illustrates a side view of the data acquisition system 10 of Figure 1. Ship 2, located on ocean surface 46 of ocean water 40, tows one or more streamers 6, that is comprised of cables 12, and a plurality of receivers 14. Shown in Figure 2 are two source streamers, which include sources 4a,b attached to respective cables 12a,b. Each source 4a,b is capable of transmitting a respective sound wave, or transmitted signal 20a,b. For the sake of simplifying the drawings, but while not detracting at all from an understanding of the principles involved, only a first transmitted signal 20a will be discussed in detail (even though some or all of source 4 can be simultaneously (or not) transmitting similar transmitted signals 20). First transmitted signal 20a travels through ocean 40 and arrives at first refraction/reflection point 22a. First reflected signal 24a from first transmitted signal 20a travels upward from ocean floor 42, back to receivers 14. As those of skill in the art can appreciate, whenever a signal - optical or acoustical - travels from one medium with a first index of refraction $n_1$ and meets with a different medium, with a second index of refraction $n_2$, a portion of the transmitted signal is reflected at an angle equal to the incident angle (according to the well-known Snell's law), and a second portion of the transmitted signal can be refracted (again according to Snell's law).

Thus, as shown in Figure 2, first transmitted signal 20a generates first reflected signal 24a, and first refracted signal 26a. First refracted signal 26a travels through sediment layer 16 (which can be generically referred to as first subsurface layer 16) beneath ocean floor 42, and can now be considered to be a "new" transmitted signal, such that when it encounters a second medium at second refraction/reflection point 28a, a second set of refracted and reflected signals 32a and 30a, are subsequently generated. Further, as shown in Figure 2, there happens to be a significant hydrocarbon deposit 44 within a third medium, or solid earth/rock layer 18 (which can be generically referred to as second subsurface layer 18). Consequently, refracted and reflected signals are generated by the hydrocarbon deposit, and it is the purpose of data acquisition system 10 to generate data that can be used to discover such hydrocarbon deposits 44.

As further seen in Figure 2, second refracted signal 32a encounters hydrocarbon deposit 44, at third refraction/reflection point 34a, generating third refracted signal 38a, and third reflected signal 36a. Further, second transmitted signal 20b generates first reflected and refracted signals (from second transmitted signal) 24b, and 26b, respectively, at first reflection/refracting point 22b. Second refracted signal 26b encounters solid earth/rock layer 18 at second reflection/refraction point 28b, thereby generating second reflected signal 30b, and second refracted signal 32b. Second refracted signal 32b travels through second layer 18 and encounters hydrocarbon deposit 44 and third reflection/refraction point 34b, and generates third reflected signal 36b and third refracted signal 38b. As those of skill in the art can appreciate, though it appears that this process can continue *ad infinitum,* such may be technically true and possible, but with each reflection/refraction, only a certain percentage of the energy from the impinging signal is reflected and refracted, and so the strength of the signal diminishes quickly, and can, in fact, after only a few encounters with such interfaces, diminish to the point that the sensitivity of receivers 14 is not large enough to distinguish the signals over other noise in the system. Nonetheless, it is an important part of seismic signal processing to discern different refracted/reflected signals from the noise to the greatest extent possible.

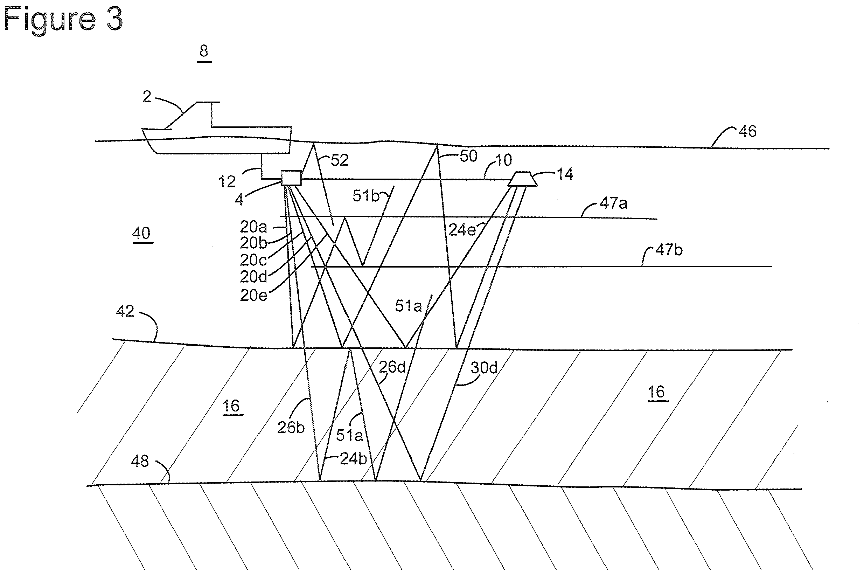

The signals recorded by seismic receivers 14 vary in time, having energy peaks that may correspond to reflectors between layers. In reality, since the sea floor and the air/water are highly reflective, some of the peaks correspond to multiple reflections or spurious reflections that should be eliminated before the geophysical structure can be correctly imaged. Primary waves suffer only one reflection from an interface between layers of the subsurface (e.g., first reflected signal 24a). Waves other than primary waves are known as multiples, and more strictly, are events that have undergone more than one reflection. Typically, multiples have a much smaller amplitude than primary reflected waves, because for each reflection, the amplitude decreases proportionally to the product of the reflection coefficients of the different reflectors (usually layers or some sort). As shown in Figure 3, discussed below, there are several ways for multiples to be generated.

As illustrated in Figure 3, seismic source 4 produces first transmitted wave 20a that splits into a primary transmitted wave 26a (referred to also as first refracted signal) penetrating inside first subsurface layer 16 (referred to also as "sediment layer" though that does not necessarily need to be the case) under ocean floor 42, and first reflected signal 24a that becomes surface multiple signal 50 after it interfaces with ocean surface 46 (or fourth interface). Second transmitted wave 20b is reflected once at second interface 48 and becomes second reflected signal 24b, and then is reflected down again from ocean floor 42 to become internal multiple signal 51. Internal multiple signal 51 and surface multiple signal 50 also reaches receiver 14, but at different times. Thus, receiver 14 can receive at least several different signals from the same transmitting event: second reflected signal 30a, surface multiple signal 50, and internal multiple signal 51. Multiples can also be classified as short path multiples, and long path multiples (e.g., surface multiples and internal multiples). Short path multiples are those whose travel path is short compared to the primary reflections, and long path multiples are those whose travel path is long compared to the primary reflections. One type of short path multiples include ghosts 52, in which the seismic energy or wave is transmitted upwards first towards a reflecting boundary layer, then down, and up again to the receiver. As seen in Figure 3, ghost 52 leaves source 4, travels upwards and reflects nearly perfectly off ocean surface 46, then down to ocean floor 42, and up to receiver 14. Because of the near perfect reflectivity of ocean surface 46, the magnitude of ghosts 52 rivals that of "true" reflected signals 24 and thus are typically very important to marine seismic exploration. As such, ghosts 52 can be very strong.

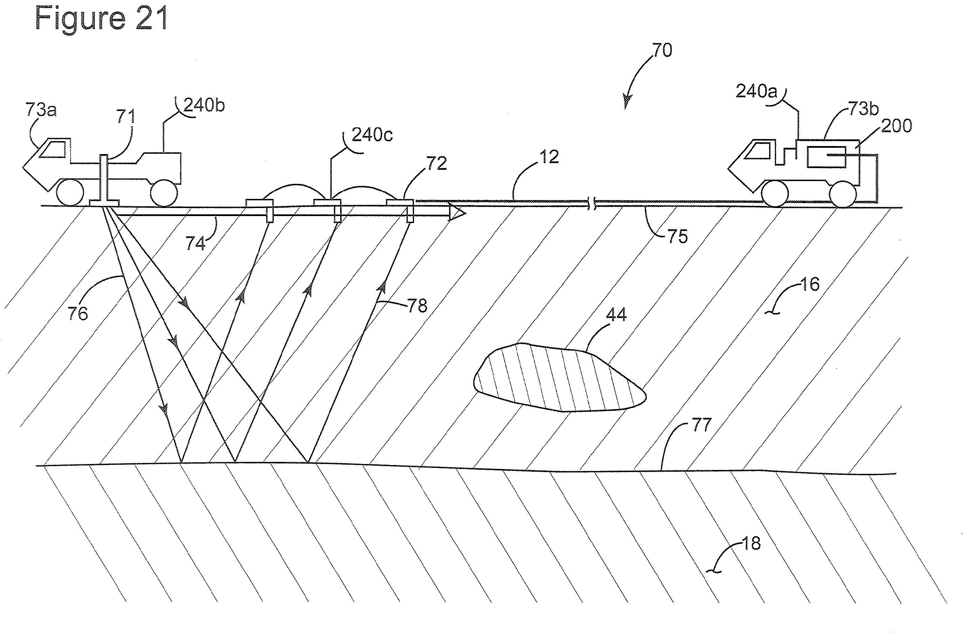

As discussed above, the system and method of different aspects of the embodiments are applicable to both marine and land seismic exploration systems. Figure 21 depicts schematically a land seismic exploration system (system) 70 for transmitting and receiving vibro-seismic waves intended for seismic exploration in a land environment. At least one purpose of system 70 is to determine the absence, or presence of hydrocarbon deposits 44, or at least the probability of the absence or presence of hydrocarbon deposits 44. System 70 comprises a source consisting of a vibrator 71 (source and vibrator being interchangeable terms for the same device) operable to generate a seismic signal (transmitted waves), a plurality of receivers 72 (or geophones) for receiving seismic signals and converting them into electrical signals, and seismic data acquisition system 200' (that can be located in, for example, vehicle/truck 73) for recording the electrical signals generated by receivers 72. Source 71, receivers 72, and data acquisition system 200', can be positioned on the surface of ground 75, and all interconnected by one or more cables 72. Figure 21 further depicts a single vibrator 71, but it should be understood that source 71 can actually be composed of multiple or a plurality of sources 71, as is well known to persons skilled in the art.

In operation, source 71 is operated so as to generate a vibro-seismic signal. This signal propagates firstly on the surface of ground 75, in the form of surface waves 74, and secondly in the subsoil, in the form of transmitted ground waves 76 that generate reflected waves 78 when they reach an interface 77 between two geological layers. Each receiver 72 receives both surface wave 74 and reflected wave 76 and converts them into an electrical signal in which are superimposed the component corresponding to reflected wave 78 and the one that corresponds to surface wave 74, the latter of which is undesirable and should be filtered out as much as is practically possible.

As is apparent from Figure 3, the timing of the received signals will depend on the depth of the ocean 40, its temperature, density, and salinity, the depth of sediment layer 16, and what it is made of. Thus, receiver 14 can become "confused" as to the true nature of the subsurface environment due to reflected signals 30, and multiple signals 50, 51, and 52. As briefly discussed above, other multiples can also be generated, some of which may also travel through the subsurface. A multiple, therefore, is any signal that is not a primary reflected signal. Multiples, as is known by those of ordinary skill in the art, can cause problems with determining the true nature of the geology of the earth below the ocean floor. Multiples can be confused by data acquisition system 10 with first, second or third reflected signals. Multiples do not add any useful information about the geology beneath the ocean floor, and thus they are, in essence, noise, and it is desirable to eliminate them and/or substantially reduce and/or eliminate their influence in signal processing of the other reflected signals so as to correctly ascertain the presence (or the absence) of underground/underwater hydrocarbon deposits.

Internal multiple signals 51 typically arise due to a series of subsurface impedance contrasts. They are commonly observed in seismic data acquired in various places, such as the Santos Basin of Brazil. They are often poorly discriminated from the primaries (i.e., the first, second and third reflected signals, among others), because they have similar movement, dips and frequency bandwidth, thereby making attenuation and/or elimination of internal multiple signals 51 (as well as surface multiples 50) one of the key issues in providing clear seismic images in interpreting areas of interest. Over time, various methods have been developed to address this difficult problem and most of them rely on the ability to identify the multiple generators.

The acquisition of data in land and marine-based seismic methods usually produces different results in source strength and signature based on differences in near-surface conditions. Further data processing and interpretation of seismic data requires correction of these differences in the early stages of processing. Surface-Related Multiples Elimination (SRME) is a technique commonly used to predict a multiples model from conventional flat streamer data. Attenuating the surface-related multiples is based on predicting a multiples model, adapting the multiples model and subtracting the adapted multiples model from the input streamer data.

Internal multiple attenuation (IMA) has long been regarded as a challenging problem in seismic data processing. In contrast to surface related multiples that have received closer attention from researchers, primarily because of their relatively stronger effects on seismic migrated images and the ease of identifying their generators, internal multiples (IMs) tend to be regarded as a secondary issue even though it has been shown that complicated IMs do interfere with the interpretation of reservoirs (see, Griffiths, M. et al., "Applications of Inter-Bed Multiple Attenuation," The Leading Edge, 30, 906-912 [2011]; hereinafter "Griffiths").

Internal multiple attenuation presents a major problem to both the geologist and the geophysicist. For the geologist the amount of noise can often be such that accurate interpretation of the primary seismic wavefield is impossible, making seismic data unusable. For the geophysicist internal multiples are hard to distinguish from the primaries and more difficult to deal with than surface related multiples. In land seismic exploration environments, internal multiples have a dispersed character that creates a curtain of noise often stronger than primaries and are such that move-out discrimination or de-convolution techniques usually fail to eliminate and/or reduce their influence. In marine applications, however, the strength of internal multiples is usually much weaker than that of the primaries.

Recent developments in SRME such as three dimensional (3D) and true-azimuth applications have advanced the technology further (see, Lin, D. et al., 3D "SRME Practice for Better Imaging," 67th Conference & Technical Exhibition, EAGE, Extended Abstracts, A030 [2005], and Moore, I. et al., "3D Surface-Related Multiple Prediction (SMP): A Case History," The Leading Edge, 24, 270-274 [2005]). Since applying the concept of SRME to predict IMs is not a new idea, efforts have been spent in extending IMA to 3D applications. Methods based on kinematic calculations using post-stack data (Reshef, M. et al., "3D Prediction of Surface-Related and Inter-Bed Multiples," Geophysics, 71(1), V1-V6 [2006]), model-driven wavefield extrapolation (Pica, A. et al., "Wave Equation Based Internal Multiple Modeling in 3D," 78th Meeting, SEG, Expanded Abstracts, 2476-2480 [2008]), and Jakubowicz's (1998) approach (Jakubowicz, H., "Wave Equation Prediction and Removal of Inter-Bed Multiple," 68th Meeting, SEG, Extended Abstracts, 1527-1530 [1998]), among others, have been proposed. Nevertheless, most of these methods require *apriori* information about the subsurface. While *apriori* knowledge of certain sub-surface marine seismic areas is sometimes available, it is the nature of marine seismic exploration to determine sub-surface knowledge of geographical areas of interest that have not yet been explored, in order to determine the suitability, or not, for hydrocarbon mining.

Progress, however, has been made in addressing the need of identifying the multiple-generating interfaces for IMA. Approaches such as an inverse scattering series (see, Weglein, A. B. et al., "An Inverse-Scattering Series Method for Attenuating Multiples in Seismic Reflection Data," Geophysics, 62, 1975-1989 [1997]), a layer-based method (see, Verschuur, D.J. et al., "Removal of Internal Multiples with the Common-Focus-Point (CFP) Approach: Part 2 - Application Strategies and Data Examples," Geophysics, 70, V61-V72 [2005]), and window-based method (see, Hung, B. et al., "Internal De-multiple Methodology Without Identifying the Multiple Generators," 82nd Meeting, SEG, Expanded Abstracts [2012]; and Retailleau, M.G. et al., "Advanced 3D Land Internal Multiple Modeling and Subtraction, a WAZ Oman Case Study," 73rd Conference & Technical Exhibition, EAGE, Extended Abstracts [2011]) have been suggested for predicting IMs without subsurface information. However, besides the work of Retailleau, most of these approaches are limited to two dimensional (2D) applications only. Therefore, the azimuth aspect of the data has not been explicitly considered. El-Emam's article, "Advances in Inter-Bed Multiples Prediction and Attenuation: Case Study From Onshore Kuwait," mentioned true-azimuth implementation for IMA but their approach applies to suppressing targeted IMs only.

The article by Zhiming James Wu et al. entitled "Robust internal multiple prediction algorithm", SEG San Antonio 2011 Annual Meeting, pages 3541-3545 discloses a data-driven internal multiple prediction method.

Accordingly, it would be desirable to provide methods, modes and systems for predicting 3D internal multiple in a true-azimuth manner without the subsurface information to assist with internal multiple attenuation.

## SUMMARY

An object of the embodiments is to substantially solve at least the problems and/or disadvantages discussed above, and to provide at least one or more of the advantages described below.

It is therefore a general aspect of the embodiments to provide a system and method for predicting internal multiples in marine seismic subsurface exploration that will obviate or minimize problems of the type previously described.

According to an embodiment, there is provided a method for substantially eliminating true-azimuth three dimensional (3D) internal multiple reflections according to claim 1.

According to an aspect that is not covered by the appended claims, a method for substantially eliminating true-azimuth three dimensional (3D) internal multiple reflections includes the steps of defining a set of M upper windows, $W_{j(N)}$, that corresponds physically to a space below a plurality of receivers and includes a geographical area of interest, defining a pair of lower windows, $W_k$ and $W_l$, both of which are lower than the upper window, defining a first aperture location with a first set of X and Y dimensions, and defining a second aperture location with a second set of X and Y dimensions, segmenting seismic data to each of windows $W_{j(N)}$, $W_k$, and $W_l$ as $D_{wj(N)}$, $D_{wk}$, and $D_{wl}$, respectively using the first and second aperture locations, and determining a total internal 3 D multiple model based on an iteratively generated internal 3D multiple model $M(xr,yr|xs,ys;f)(N)$ using said segmented data $D_{wj(N)}$, $D_{wk}$, and $D_{wl}$.

According to another embodiment, there is provided a seismic system for substantially eliminating true-azimuth three dimensional (3D) internal multiple reflections according to claim 12.

## BRIEF DESCRIPTION OF THE DRAWINGS

The above and other objects and features of the embodiments will become apparent and more readily appreciated from the following description of the embodiments with reference to the following figures, wherein like reference numerals refer to like parts throughout the various figures unless otherwise specified, and wherein:

Figure 1 illustrates a top view of a data acquisition system for use in an underwater seismic gathering process;

Figures 2 and 3 illustrate a side view of the data acquisition system of Figure 1 and pictorially represent transmitted, reflected, refracted and multiples sound waves;

Figure 4 illustrates the generation of internal multiples with the definition of first and second surface apertures indicated by dashed line rectangles;

Figure 5 illustrates the prediction of all internal multiples without identifying any multiple generating horizons, as shown in Figure 4, by a window based top-down stripping of the top generators according to an embodiment;

Figure 6 illustrates a lateral view of the definition of surface apertures for the 3D internal multiple modeling prediction and attenuation process according to an embodiment;

Figure 7 illustrates a top view corresponding to the lateral view of Figure 6 of the definition of the surface apertures for the 3D internal multiple modeling prediction and attenuation process according to an embodiment;

Figure 8 illustrates a set of 3D synthetic data generated by an acoustic wave-equation modeling using a velocity function to demonstrate the ability to predict and attenuate internal multiples using the system and method according to the presented embodiments;

Figure 9 illustrates a close up view of the section labeled "A" in Figure 8, and as such is a close up view of the result of implementation of the system and method on the synthetically generated data of Figure 8 identifying primary reflections and internal multiples according to the presented embodiments;

Figure 10A illustrates primary and internal multiples generated as input data for a near offset section prior to implementing internal multiple attenuation;

Figure 10B illustrates a 2D internal multiple model based on conventional processes;

Figure 10C represents the difference, or subtraction results, when removing the 2D internal multiples of Figure 10B from the input data of Figure 10A;

Figure 11A illustrates primary and internal multiples generated as input data for a near offset section prior to implementing internal multiple attenuation;

Figure 11B illustrates a 3D internal multiple model based on the systems and methods according to embodiments discussed herein;

Figure 11C represents the difference, or subtraction results, when removing the 3D internal multiples of Figure 11B from the input data of Figure 11A;

Figure 12A and 12B illustrates a flow chart of a method for true azimuth three-dimensional (3d) internal multiples attenuation without apriori knowledge of multiple-generating interfaces according to an embodiment;

Figure 13A illustrates data obtained from a plurality of receivers 14 following transmission by one or more sources 4 of one or more seismic waves in the Santos Basin region offshore Brazil;

Figure 13B illustrates internal multiple attenuation of the Santos Bason region using a conventional 2D method;

Figure 13C illustrates internal multiple attenuation of the Santos Bason region using method 100 according to the presented embodiments;

Figure 14 illustrates seismic data acquisition system 200 suitable for use to implement method 100 for true azimuth three-dimensional (3d) internal multiples attenuation without apriori knowledge of multiple-generating interfaces according to an embodiment;

Figure 15 illustrates a general method for seismic exploration according to an embodiment;

Figure 16 illustrates a partial side view of another embodiment of the marine seismic exploration system shown in Figure 1, wherein a curved streamer profile is implemented according to an embodiment;

Figure 17 illustrates a multi-level source for use with the marine seismic exploration system shown in Figure 1 according to an embodiment;

Figures 18A through 18E illustrate a configuration of at least two streamers for use in the marine seismic exploration system shown in Figure 1;

Figure 19 illustrates a tail-buoy for use with the marine seismic exploration system shown in Figure 1 with a ballasted keel shown in the extended position;

Figure 20 illustrates a tail-buoy for use with the marine seismic exploration system shown in Figure 1 with the ballasted keel shown in the retracted position.

Figure 21 depicts schematically a device for transmitting and receiving vibro-seismic waves intended for seismic exploration in a land environment;

Figure 22 illustrates a seismic data acquisition system suitable for use to implement a method for true azimuth three-dimensional (3d) internal multiples attenuation without apriori knowledge of multiple-generating interfaces according to an embodiment.

## DETAILED DESCRIPTION

The embodiments are described more fully hereinafter with reference to the accompanying drawings, in which embodiments of the inventive concept are shown. In the drawings, the size and relative sizes of layers and regions may be exaggerated for clarity. Like numbers refer to like elements throughout. The embodiments may, however, be embodied in many different forms and should not be construed as limited to the embodiments set forth herein. Rather, these embodiments are provided so that this disclosure will be thorough and complete, and will fully convey the scope of the inventive concept to those skilled in the art. The scope of the embodiments is therefore defined by the appended claims. The following embodiments are discussed, for simplicity, with regard to the terminology and structure of a marine seismic exploration system. However, the embodiments to be discussed next are not limited to these systems but may be applied to other seismic exploration systems that are affected by internal multiples, such as land seismic systems.

Reference throughout the specification to "one embodiment" or "an embodiment" means that a particular feature, structure, or characteristic described in connection with an embodiment is included in at least one embodiment of the embodiments. Thus, the appearance of the phrases "in one embodiment" on "in an embodiment" in various places throughout the specification is not necessarily referring to the same embodiment. Further, the particular feature, structures, or characteristics may be combined in any suitable manner in one or more embodiments.

Used throughout the specification are several acronyms, the meaning of which are provided as follows: universal serial bus (USB); internal multiples (IMs); internal multiple attenuation (IMA); two dimensional (2D); three dimensional (3D); multiple contribution gathers (MCGs); normal move out (NMO); differential normal move out (DNMO); top of salt (TOS); base of salt (BOS); and geographical area of interest (GAI).

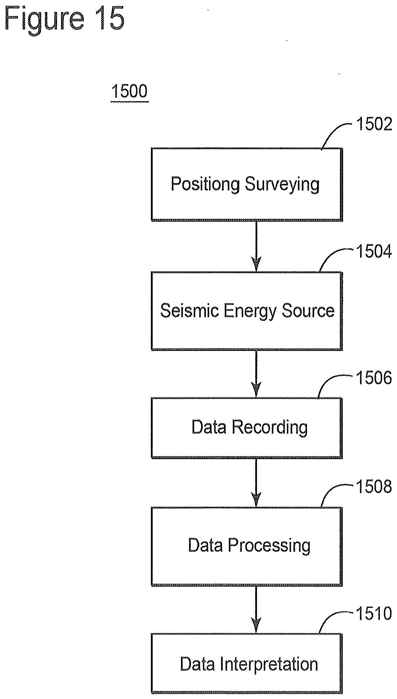

As generally discussed above, the main purpose of seismic exploration is to render the most accurate possible graphic representation of specific portions of the Earth's subsurface geologic structure (also referred to as a GAI). The images produced allow exploration companies to accurately and cost-effectively evaluate a promising target (prospect) for its oil and gas yielding potential (i.e., hydrocarbon deposits 44). Figure 15 illustrates a general method for seismic exploration (method 1500). There are five main steps: a detailed discussion of any one of the process steps would far exceed the scope of this document, but a general overview of the process should aid in understanding where the different aspects of the embodiments can be used. Step 1502 of method 1500 involves positioning and surveying of the potential site for seismic exploration. In step 1504, a determination of what type of seismic energy source should be used, and then causing seismic signals to be transmitted. While method 1500 applies equally to both marine and land seismic exploration systems, each will use different types of equipment, especially in generating seismic signals that are used to develop data about the Earth's subsurface geologic structure. In step 1506, data recording occurs. In a first part of this step, receivers 14,64 receive and most often digitize the data, and in a second part of the step 1506, the data is transferred to a recording station. In step 1508, data processing occurs. Data processing generally involves enormous amounts of computer processing resources, including the storage of vast amounts of data, multiple processors or computers running in parallel. Finally, in step 1510, data interpretation occurs and results can be displayed, sometimes in two-dimensional form, more often now in three dimensional form. Four dimensional data presentations (a 3D plot or graph, over time (the fourth dimension) are also possible, when needed to track the effects of other processes, for example.

Embodiments discussed herein take into account the 3D nature of the earth's subsurface for predicting IMs without identifying the multiple-generating interfaces. In addition, the system and method discussed herein can predict IMs with true-azimuth geometries. Consequently, substantial improvement in image quality can be obtained by including cross-line aperture in the prediction process and selecting traces with correct azimuth in the convolution and correlation processes.

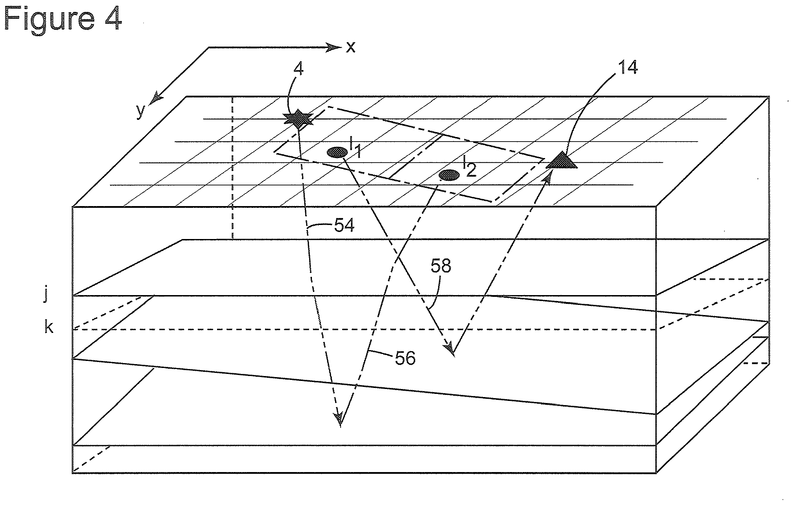

In the following discussions, reference is specifically made to true azimuth 3D internal multiples attenuation in marine seismic exploration systems; however, as discussed above, and those of skill in the art might be expected to appreciate, embodiments thereto are not limited to the same, and apply equally as well to land seismic exploration systems according to an embodiment. Following the work of Jakubowicz in 1998, Griffiths in 2011 extended their 3D SRME workflow to handle IMs by identifying the multiple-generating horizons by muting the input data. As illustrated in Figure 4 (note that in Figure 4, source 4 is represented by a star, and receiver 14 by a triangle), an IM model that is specific to the horizon j can be predicted by the convolution-correlation process of Jakubowicz using Equation (1):

$$M_j(x_r, y_r | x_s, y_s; f)$$

$$= \sum_{y_2}^{y2_{aperture}} \sum_{x_2}^{x2_{aperture}} \sum_{y_1}^{y1_{aperture}} \sum_{x_1}^{x1_{aperture}} D_m(x_r, y_r | x_1, y_1; f)$$

$$\otimes D_{m'}^*(x_1, y_1 | x_2, y_2; f) \otimes D_m(x_s, y_s | x_2, y_2; f) \quad (1),$$

where $D_m$ and $D_{m'}$ are the data muted above and below a horizon (e.g. horizon k) just underneath horizon j, respectively (muting being the process of arbitrarily assigning values of zero to certain traces); $D_{m'}^*$ is the complex conjugate of $D_{m'}$

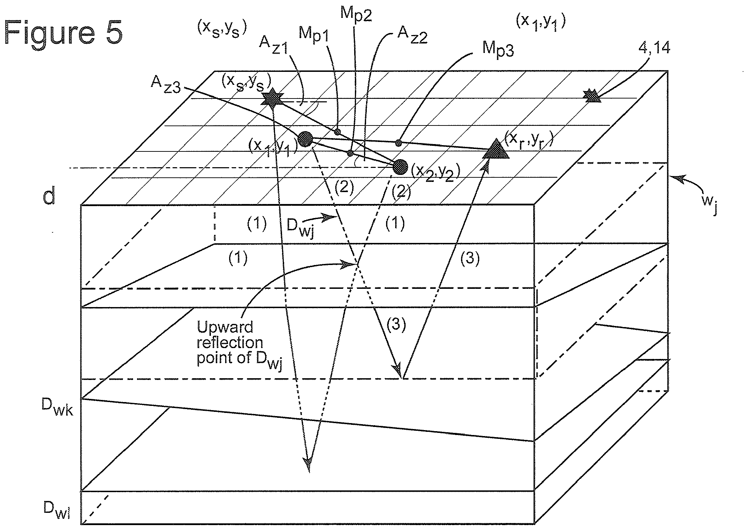

and "⊗" represents convolution operation. Two surface apertures, indicated by the dotted rectangles, are needed in this case to locate the two reflection points, 11 and 12, to predict the multiple model Mj (because of the three dimensional aspect, i.e., azimuth, as shown in Figure 5). That is, in Figure 4, the true source transmits a first wave 54, which is reflected as second wave 56; normally, without internal multiples, second wave 56 would arrive at the surface at position 12; however, because of the internal multiple generated by horizon j, IM wave 58 appears to be generated at point I1 and arrives at the surface where receiver 14 is located. 11, therefore, represents the apparent origin of the wave 58.

Recently, a methodology has been presented for 2D cases in an article entitled "Internal De-multiple Methodology Without Identifying the Multiple Generators," 82nd Meeting, SEG, Expanded Abstracts [2012], by Hung, B. et al., to predict IMs without subsurface information by segmenting the data into different time windows and iteratively locating the top multiple-generating horizon. According to an embodiment, the same principle can be applied to model 3D IMs without identifying specific multiple-generating horizons. To fulfill the lower-higher-lower relationship (see, Weglein, A. B. et al., "An Inverse-Scattering Series Method for Attenuating Multiples in Seismic Reflection Data," Geophysics, 62, 1975-1989 [1997]) that is useful in the modeling of IMs, input data within the apertures is segmented into different windows, as shown in Figure 5, in such a way that the window responsible for the downward reflections of the IMs (wj) is always at a "higher" level (shorter travel time) than the two windows that account for the upward reflections. With this implementation, all the IMs that have their top generators located within wj can then be modeled. Note that in Figure 5, the layer (or window) wk reflects the signal upward, as does the window wl. Repeating this operation to include possible deeper top generators (i.e. using deeper window-segmented data consecutively), all IMs can be modeled without the need of identifying any 3D multiple-generating interface. This iterative process is equivalent to modifying Equation (1) as follows:

$$M(x_r, y_r | x_s, y_s; f)$$

$$= \sum_{w_j=1}^{w_n} \sum_{y_2}^{y2_{aperture}} \sum_{x_2}^{x2_{aperture}} \sum_{y_1}^{y1_{aperture}} \sum_{x_1}^{x1_{aperture}} D_{w_k}(x_1, y_1 | x_r, y_r; f)$$

$$\otimes D_{w_j}^*(x_1, y_1 | x_2, y_2; f) \otimes D_{w_l}(x_s, y_s | x_2, y_2; f) \quad (2),$$

such that wk, wl > wj, and wherein Dwk represents the segmented data that is muted off outside the time window wk and the condition: wk, wl > wj indicates that Dwk and Dwl are the portions of data that have longer travel time than Dwj. An extra summation term in Equation (2) is to ensure that all the possible multiple-generating horizons are taken into account in the process of predicting the IMs.

The term $D_{w_j}^*(x_1, y_1 | x_2, y_2; f)$ implies a complex conjugate of a trace from coordinate (x1,y1) to (x2,y2) in frequency domain with an upward reflection window wj, and (x1,y1) and (x2,y2) are located within the two user defined apertures, A1, A2, respectively, and which is also a function of frequency, f. The term $D_{wk}(x_1, y_1 | x_r, y_r; f)$ implies a trace from coordinate (x1,y1) to (xr,yr) (where "r" = receiver), with an upward reflection window wk, (xr,yr) being the x and y coordinates of the receiver. The term $D_{w_l}(x_s y_s | x_2, y_2; f)$ implies a trace from coordinate (xs,ys) (where "s" = source) to (x2,y2), with an upward reflection window wl, (xs,ys) being the x and y coordinates of the source.

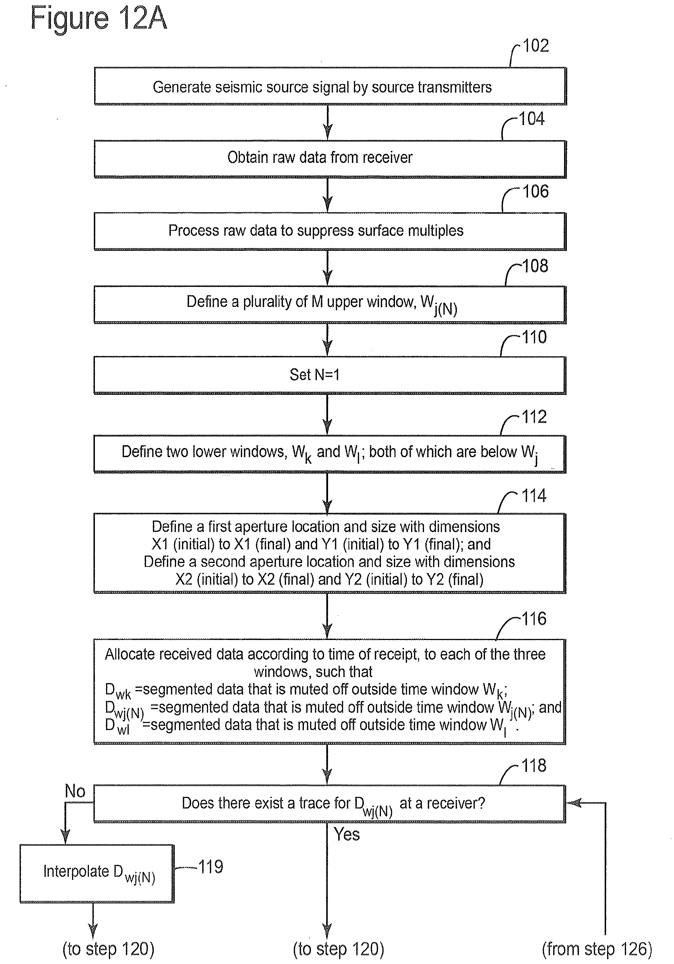

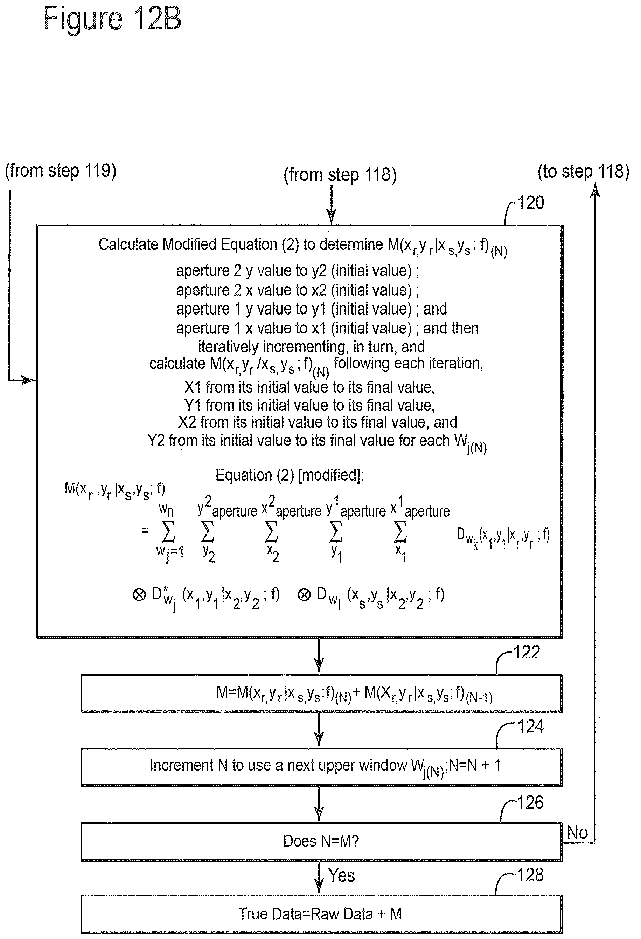

It can be appreciated by those of skill in the art that in true-azimuth 3D SRME it is important that appropriate traces need to be selected for constructing the multiple contribution gathers (MCGs). Similarly, in true-azimuth 3D internal multiple modelling, it is important to carefully select and interpolate traces to properly account for the aspects of azimuth, offset and midpoint in realizing Equation (2). This stems from the fact that in any given aperture, available traces whose sources 4 and receivers 14 are not located everywhere, but only at the grid points, and hence one needs to carefully select these available traces to reconstruct the required traces, i.e. receiver at (x2,y2) for Dwl, source at (x1,y1) for Dwk and source at (x1,y1) and receiver at (x2,y2) for Dwj, for generating the MCGs. The increase in complexity in this case (i.e., Equation (2)) stems from the fact that two surface apertures are included within which the required traces are reconstructed for contributing to the MCG. To solve this problem, interpolation using normal move-out (NMO) is implemented, as discussed in greater detail below, and especially in regard to Figure 12, which is a flow chart of method 100 according to an embodiment.

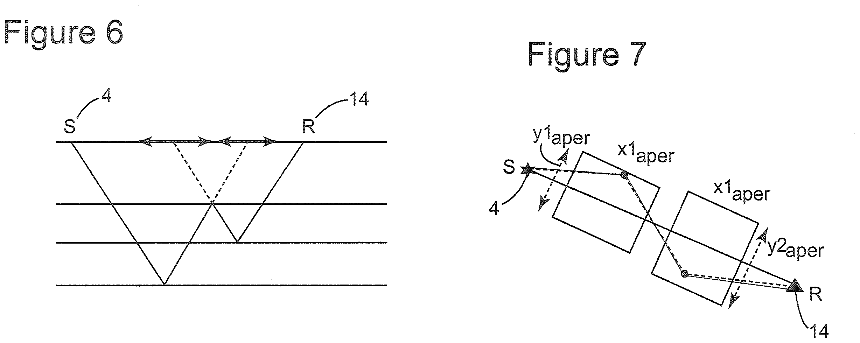

To assist in illustrating the use of interpolation, Figure 6 illustrates a lateral view of the definition of surface apertures for the 3D internal multiple modeling prediction process according to an embodiment, and Figure 7 illustrates a top view corresponding to the lateral view of Figure 6. The shot (source) 4 and receiver 14 positions of three pairs of required traces are indicated and the dotted lines represent the required azimuths and offsets. Referring back to Figure 5, however, it can be seen that the three traces (the traces have been labelled in Figure 5 (1), (2) and (3)) comprise a first trace from the source to X2 (i.e., an upward reflection from Dwl); a second trace from X1 to X2 (i.e., an upward reflection from Dwj); and a third trace from X1 to the receiver (i.e., an upward reflection from Dwk). Midpoint refers to the middle of the straight line between each of the three traces; the midpoints have been labelled Mp1, Mp2 and Mp3, respectively, for each of the three traces. The azimuth represents the angle between each trace and an imaginary line parallel to the grid lines drawn from one of the trace points. The azimuths have been labelled Az1, Az2, and Az3.

As discussed above, however, the traces that are desired to be processed are seldom present in the regularly collected data, meaning that because the apertures generally define a certain physical area, the location within the aperture of the additional shot points is usually between receivers, as they are located at grid points. Depending on the selection criteria of the apertures that may minimize the difference in azimuth, offset and midpoint, or weighted sum of these three, the nearest available traces are extracted from the input 3D shot and receiver gathers, and differential normal move out (NMO) can then be used according to an embodiment for correcting the discrepancy in offset and the resulting trace is rotated about the desired midpoint. In doing so, a trade-off can be made in determining the relative importance of the three terms.

According to an embodiment, the method selects three traces and these are then segmented according to their respective requirements of minimizing the differences in azimuth, offset and midpoint, in ensuring that the low-high-low relationship is fulfilled. According to an embodiment, for non-zero offset traces, the windowing time is calculated based on a different normal move-out equation. Thus, hyperbolic events are assumed. However, it has been determined according to the embodiments, that with less complicated subsurface areas, and the use of overlapping windows, it is valid to assume that all top generators are included in the process.

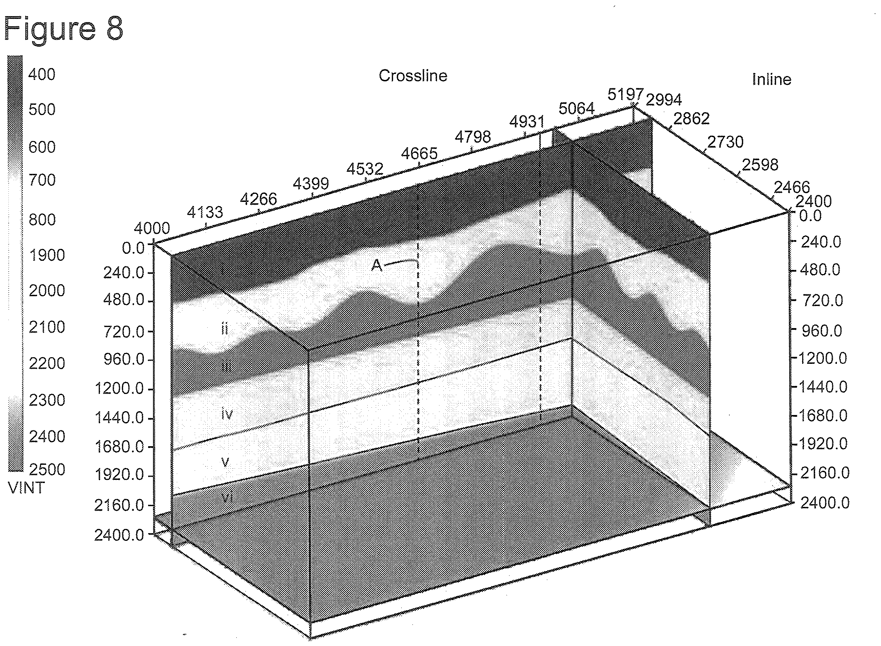

Figure 8 illustrates a set of 3D synthetic data generated by an acoustic wave-equation modeling using a velocity function to demonstrate the ability to predict internal multiples using the system and method according to the presented embodiments. As known by those of skill in the art, the density function has a substantially similar profile as that of the velocity function. Note in Figure 8, that there are six (labeled i - vi) substantially constant velocity stratum and the x, y, and z axis, and wherein the x and y axis are normalized by a factor of 25 meters, below the water surface level, and the z axis is in milli-seconds. Further, it can clearly be seen that there are five separate events of which the top two events have significant dip in the crossline direction (i.e., an event, for example the first event, is the interface between the first velocity/density layer, i, and the second velocity/density layer ii, and the second event is the interface between the second velocity/density layer ii and third velocity/density layer iii, and so on). The velocity and density profiles were modified so that identifiable IMs were generated. In this case, all the primary events are the generators of the multiples.

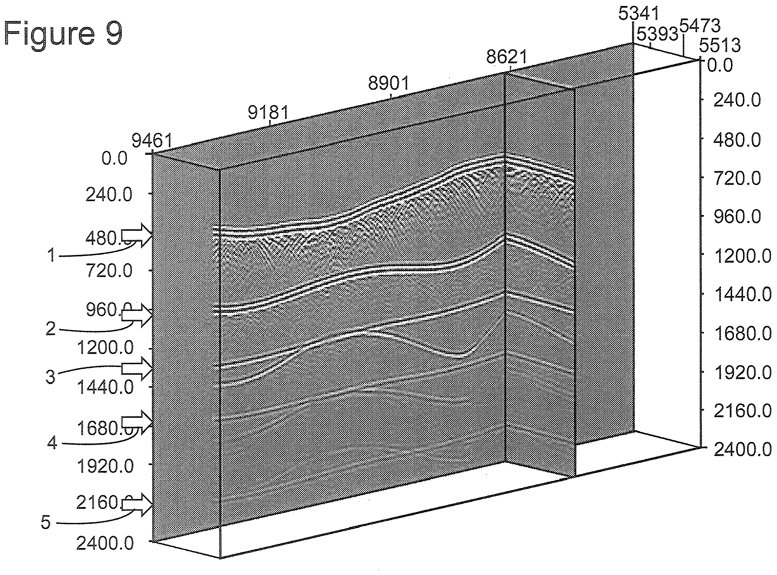

Figure 9 illustrates a close up view of the section labeled "A" in Figure 8, and as such is a close up view of the result of implementation of the system and method on the synthetically generated data of Figure 8 identifying primary reflections and internal multiples according to the presented embodiments. Figure 9 depicts a portion of common offset volume where the primaries are indicated (by arrows 1-5) and the rest of the events are IMs (surface related multiples have been excluded in the modelling process).

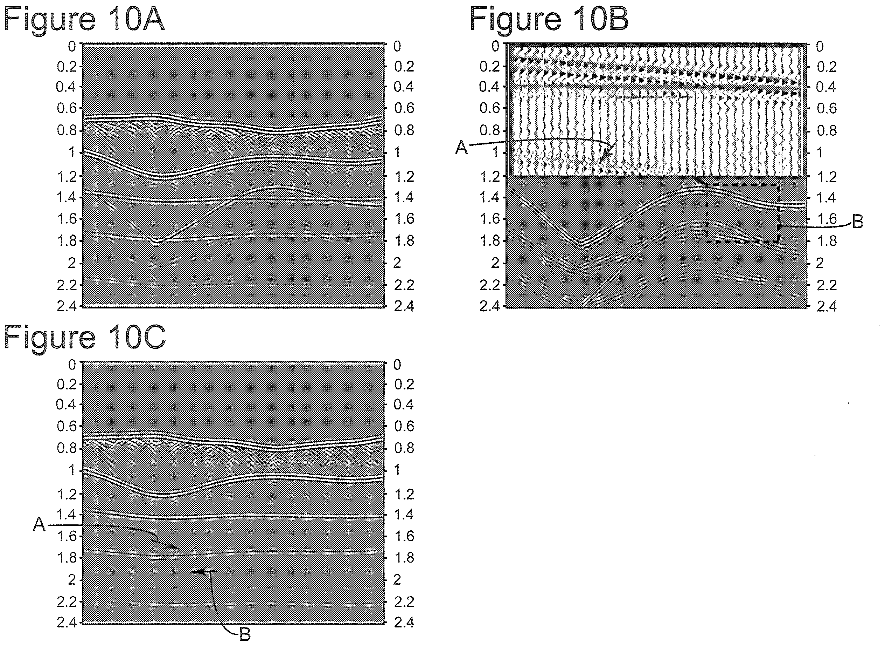

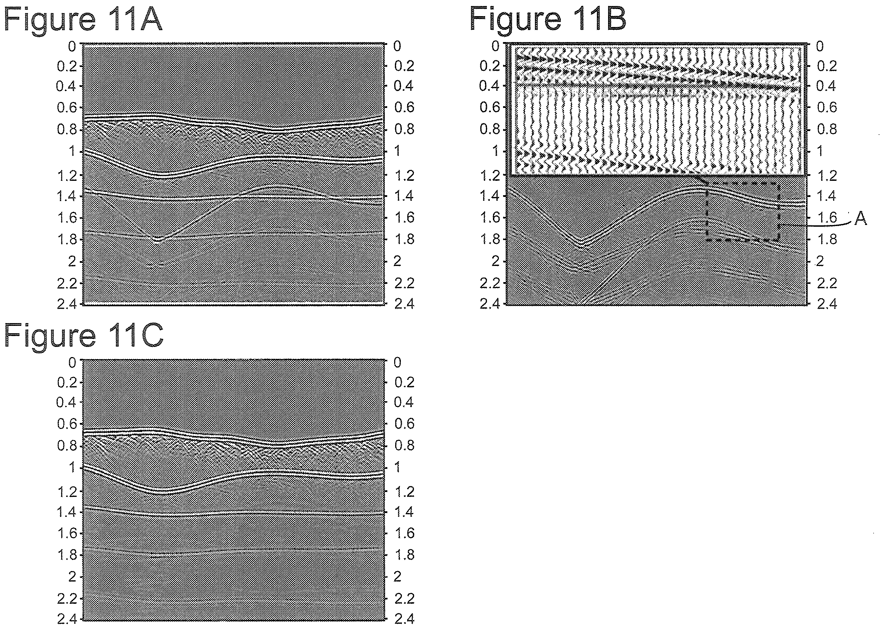

Turning now to implementation of the system and method of the embodiments using the synthetic data of Figures 8 and 9, Figure 10A illustrates primary and internal multiples generated for a near offset section prior to implementing internal multiple attenuation, and Figure 10B illustrates a 2D internal multiple model based on conventional processes. Figure 10C represents the subtraction results, when removing the 2D internal multiples of Figure 10B from the input data of Figure 10A. According to an embodiment, the same processes are shown in Figure 11A-C, but with the 3D internal multiple model provided by the system and method according to the embodiments discussed herein. Without identifying the multiple-generating interfaces, the IM model predicted by the method according to the presented embodiments, using a y-aperture of 500m, is depicted in Figure 11B. As a reference, the 2D model is shown in Figure 10B.

In Figure 10B, there is a wiggle display, labelled as box B, which is a magnified overlaid section that highlights the extent of matching between the data input (coloured wiggle) of Figure 10A, and the 2D IM models (grey wiggle) of Figure 10C. The same type of wiggle display, with magnification, is shown in Figure 11B (dashed line-box A that represents a portion of Figure 11B exploded). It can be seen that, due to the out-of-plane contributions, the 3D model exhibits superior matching in the travel time with the input than the 2D model. Consequently, after performing adaptive subtraction, there is much more residual of the IMs left in the 2D result as depicted in Figure 10C than the 3D result in Figure 11C.

Figure 12 is a flow diagram of method 100 for determining a true-azimuth 3D internal multiple model without subsurface information according to an embodiment, and for substantially eliminating the influence of said true-azimuth 3D internal multiple reflections in geographical area of interest without the a priori knowledge of subsurface information according to an embodiment according to an embodiment. Method 100 begins with step 102, in which seismic signals are generated by sources 4. In step 104, raw data is received from all of the receivers 14 and stored in an appropriate memory storage device. The raw data is processed in step 104 only to the extent that surface multiples are suppressed (step 106). According to an exemplary embodiment, one manner of suppressing surface multiples is SRME, discussed briefly above. Other known methods can include those such as Radon transform and wavefield modeling. In step 108, a plurality of upper windows Wj(N) are defined for the geographical area of interest. Windows are defined according to a length 1 and a depth d. According to an embodiment, the length of the window is important as the window length 1 must be less than the total distance between the first and last source 4. The depth of the window is determined based on the speed of sound in sea water, which can generally be presumed to be about 1500 meters-per-second. Thus the window size has both a time and length dimension. If ship 2 is about 1500 meters above the surface of the ocean, a sound wave will take about two seconds to travel from source 4 to ocean floor 42, and then back again to receiver 14. According to a first embodiment, each window can be defined to correspond to about 100 milliseconds. This corresponds to about 150 meters in depth, and there will be about ten windows between the ocean surface and the bottom of the ocean (thus M = 10). However, those of ordinary skill in the art can appreciate that the window can be defined to be virtually any depth (i.e., time interval), wherein the limiting factors in deciding how many windows to implement can be sample size, processing speed and time, as well as memory storage limitations. In addition, however, there can also be constraints in terms of resolution of the sampled data, such that the window depth does approach a practical limitation based on analog-to-digital converter sampling rates, among other factors.

Following step 108, in which the M upper windows Wj(N) are defined, method 100 proceeds to step 110 in which a counter N is set equal to 1. Those of skill in the art can appreciate that such devices are necessary data processing tools that can be implemented in several different manners, and that the process of iteratively performing a calculation can therefore be accomplished in different manners than described herein. In step 112, which follows step 110, two lower windows (with respect to Wj) are defined, Wk and Wl. In step 114, the two apertures, A1 and A2, are defined in terms of location and dimensions. According to an embodiment, the first aperture A1 is provided with X dimensions ranging from X1 (initial) to X1(final), and Y dimensions ranging from Y1(initial) to Y1(final). According to a further embodiment, the second aperture A2 is provided with X dimensions ranging from X2(initial) to X2(final), and Y dimensions ranging from Y2(initial) to Y2(final).

In step 116, the received data is allocated, according to time of arrival, to each of the three windows. According to an embodiment, the two lower windows, Wk and Wl become smaller and smaller with subsequent iterations such that window wj will always be higher than wk and wl. but the upper window will be redefined in time from iteration to iteration of calculation of Equation (2). If, for example, there were 100 windows Wj(N), Wj(1) through Wj(100), then one hundred wavefields would be reconstructed, and enumerated Wj(1) up to Wj(100). As described in greater detail below, in method 100, sets of three segmented sets of data are used in Equation (2) -two that are related to the-always lower windows Wk, Wl, and the upper window Wj (which can and will vary) - to determine a set of 3D internal multiples without subsurface information according to an embodiment. According to a further embodiment, the received data is allocated according to time of receipt, to each of the three windows, such that Dwk is defined as the segmented data that is muted off outside time window Wk; Dwj(N) is defined as the segmented data that is muted off outside time window Wj(N); and Dwl is defined as the segmented data that is muted off outside time window Wl.

Following step 116, method 100 proceeds to step 118, where a determination is made if the segmented trace Dwj(N) exist in the received data. As the apertures are defined to cover certain continuous areas of the ocean surface based, in part of the respective directions of the internal multiples, it is more than likely, if not entirely probable, that an expected location of data does not match the given point of data because there are only so many receivers that are located in known, fixed positions. Therefore, if data is expected at point Xl, Y1 in aperture A1, but there is no receiver close enough to that location, extrapolation may have to occur. Therefore, if there is no trace for Dwj(N), then method 100 proceeds from step 118 to step 119 ("No" path from decision step 118) to extrapolate the desired data. Once extrapolation occurs in step 119, method 100 proceeds to step 120. However, in the rare but not entirely impossible situation of the trace being present at the point of receiver 14, that data can be used just as well, such that following "Yes" path from decision step 118, method 100 proceeds from step 118 to step 120 directly.

Step 120 of method 100 performs the iterative calculation of modified Equation (2): the values of each aperture X-Y position value is set to their respective initial values, and for the first iteration, the first set of segmented data, Dwj(N), for the upper window Wj, is used for N=1. Then, as Equation (2) indicates, the summations are calculated for each set of aperture values in turn until a first internal multiple model, M(xr,yrlxs,ys;f)(N), for N=1 is determined. In step 122, the next step in method 100, the newly calculated internal multiple model M(xr,yrlxs,ys;f)(N) is added to the previously determined internal multiple model M(xr,yrlxs,ys;f)(N-1), and kept as total internal multiple model M.

In step 124, N is incremented, then a determination is made to see if all of the muted-off segmented data from the upper window has been used (N=M?) in decision step 126, and if yes, then method 100 proceeds to step 128, wherein the process is complete and a final determination is made of the true data by adding the raw data to the total internal multiple model M. The true data is determined by adding M to the raw data (actually a subtraction, because M(xr,yrlxs,ys;f)(N) is defined as being a negative of the summation), and the result is an actual depiction of the geographical area of interest with multiples reduced and/or substantially eliminated from received raw data. If not all of the muted-off segmented data has been used for the upper window, Wj(N) ("No" path from decision step 126), method 100 returns to step 118 (with N incremented by 1), and again a determination is made, in decision step 118, whether interpolated data is needed for Dwj(N), as discussed above.

In step 120, according to an embodiment, M(xr,yrlxs,ys;f)(N) is calculated according to a modified version of Equation 2, as mentioned above. Equation 2 is modified to remove the left-most summation, so that the calculation of M (wherein M is the total internal multiple model) can be shown in a flow-diagram format; that is, the left-most summation, from Wj(1) to Wj(M) is represented by the iterative loop that computes the other summations for each defined window (discussed above), and the loop indicates that the summations are performed for each defined window according to an embodiment.

According to an embodiment, two criteria must be met in order to use method 100: first, the lower-higher-lower criteria discussed in greater detail above must be presumed to have been met, and second, the window length must be less than the separation between the multiple generators, or sources 14. That is, the window not only has a depth (in time, or meters), but also a distance (again in meters).

Disclosed within is a system and method that can predict 3D internal multiples in marine or land seismic data without requiring a priori information about the subsurface of the earth. It is intended to be used after suppression of surface-related multiples. The system and method first separates the seismic data into different windows based on the travel time of the wavefield from the source to receivers. Apertures are defined to take into account the three dimensional nature of the path of the multiples, and data can be extrapolated if necessary for determination of the influence of the internal multiples at locations where receivers do not actually exist. One method of extrapolation is the use of differential normal move-out. The internal multiple model is determined for as many different positions within the apertures as may be deemed necessary to determine a model with sufficient resolution, the specifications of which are not to be construed as a limiting feature of the embodiments. For each differently defined upper window Wj(n), the summations of the influence of the different traces based on the data in the several different muted-off segmented data is determined in an iterative basis, and then the entire process is repeated for all the different upper windows Wj(N) that have been defined.

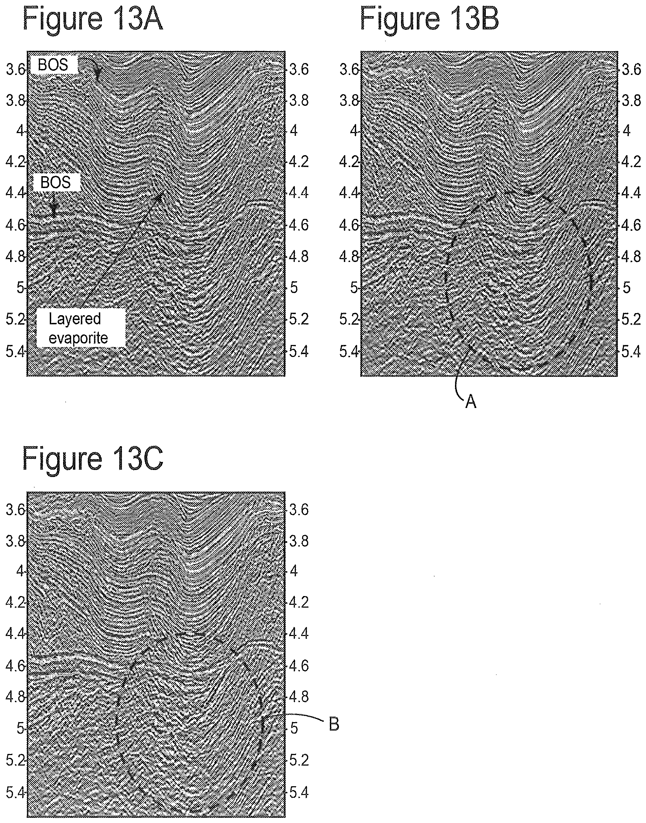

Attention is now directed towards Figures 13A-C wherein actual field data has been processed using system 200 and method 100 according to the presented embodiments. Figure 13A is field data that comes from the Santos Basin, offshore Brazil, where significant IMs are evident. Figure 13A shows a line close to the Tupi discovery. A series of impedance contrasts can be observed such as the water bottom, top-of-salt (TOS), base-of-salt (BOS) and the layered salt structures. As those of skill in the art can appreciate, it would be difficult, if not impossible, to identify all the generators of the IMs, since many of them are closely packed. Moreover, the TOS is fairly rugose in both directions (i.e., wrinkled or ridged). Figure 13A illustrates data obtained from a plurality of receivers 14 following transmission by one or more sources 4 of one or more seismic waves in the Santos Basin region. Figure 13B illustrates internal multiple attenuation of the Santos Basin region using a conventional 2D method, and Figure 13C illustrates internal multiple attenuation of the Santos Basin region using method 100 according to the presented embodiments. It can be observed by those of skill in the art that the migration swings, which are caused by the IMs and that interfere with the interpretation of the BOS are substantially reduced in the 3D result according to the presented embodiments.

Described herein is a 3D approach according to embodiments that is based on iteratively locating the multiple-generating horizons, while acknowledging the azimuths of the contributing traces so that internal multiples can be more accurately predicted and/or determined. Method 100 has been applied successfully in suppressing complex internal multiples that are generated by closely packed layered salt structures that exhibit significant 3D effects, as seen in Figure 13C.

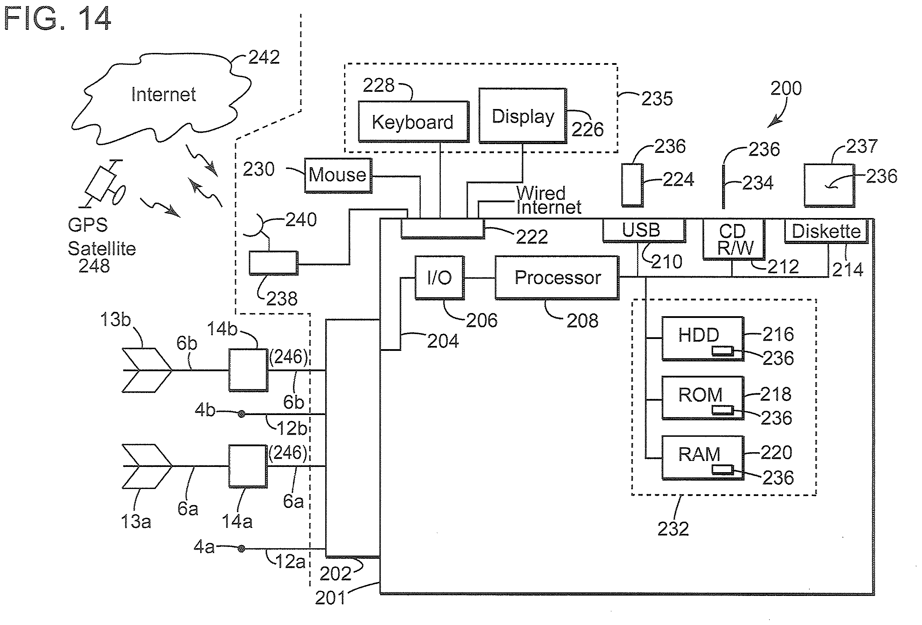

Figure 14 illustrates seismic data acquisition system 200 suitable for use to implement method 100 for determining internal multiples using the three-dimensional (3D) nature of earth's subsurface without apriori knowledge of multiple-generating interfaces according to an embodiment. System 200 includes, among other items, server 201, source/receiver interface 202, internal data/communications bus (bus) 204, processor(s) 208 (those of ordinary skill in the art can appreciate that in modern server systems, parallel processing is becoming increasingly prevalent, and whereas a single processor would have been used in the past to implement many or at least several functions, it is more common currently to have a single dedicated processor for certain functions (e.g., digital signal processors) and therefore could be several processors, acting in serial and/or parallel, as required by the specific application), universal serial bus (USB) port 210, compact disk (CD)/digital video disk (DVD) read/write (R/W) drive 212, floppy diskette drive 214 (though less used currently, many servers still include this device), and data storage unit 232. Data storage unit 232 itself can comprise hard disk drive (HDD) 216 (these can include conventional magnetic storage media, but, as is becoming increasingly more prevalent, can include flash drive-type mass storage devices 224, among other types), ROM device(s) 218 (these can include electrically erasable (EE) programmable ROM (EEPROM) devices, ultra-violet erasable PROM devices (UVPROMs), among other types), and random access memory (RAM) devices 220. Usable with USB port 210 is flash drive device 224, and usable with CD/DVD R/W device 212 are CD/DVD disks 234 (which can be both read and write-able). Usable with diskette drive device 214 are floppy diskettes 237. Each of the memory storage devices, or the memory storage media (216, 218, 220, 224, 234, and 237, among other types), can contain parts or components, or in its entirety, executable software programming code (software) 236 that can implement part or all of the portions of the method described herein. Further, processor 208 itself can contain one or different types of memory storage devices (most probably, but not in a limiting manner, RAM memory storage media 220) that can store all or some of the components of software 236.

In addition to the above described components, system 200 also comprises user console 234, which can include keyboard 228, display 226, and mouse 230. All of these components are known to those of ordinary skill in the art, and this description includes all known and future variants of these types of devices. Display 226 can be any type of known display or presentation screen, such as liquid crystal displays (LCDs), light emitting diode displays (LEDs), plasma displays, cathode ray tubes (CRTs), among others. User console 235 can include one or more user interface mechanisms such as a mouse, keyboard, microphone, touch pad, touch screen, voice-recognition system, among other inter-active inter-communicative devices.

User console 234, and its components if separately provided, interface with server 201 via server input/output (I/O) interface 222, which can be an RS232, Ethernet, USB or other type of communications port, or can include all or some of these, and further includes any other type of communications means, presently known or further developed. System 200 can further include communications satellite/global positioning system (GPS) transceiver device 238, to which is electrically connected at least one antenna 240 (according to an embodiment, there would be at least one GPS receive-only antenna, and at least one separate satellite bi-directional communications antenna). System 200 can access internet 242, either through a hard wired connection, via I/O interface 222 directly, or wirelessly via antenna 240, and transceiver 238.

Server 201 can be coupled to other computing devices, such as those that operate or control the equipment of ship 2, via one or more networks. Server 201 may be part of a larger network configuration as in a global area network (GAN) (e.g., internet 242), which ultimately allows connection to various landlines.

According to a further embodiment, system 200, being ostensibly designed for use in seismic exploration, will interface with one or more sources 4a,b and one or more receivers 14. These, as previously described, are attached to streamers 6a,b, to which are also attached birds 13a,b that are useful to maintain positioning. As further previously discussed, sources 4 and receivers 14 can communicate with server 201 either through an electrical cable that is part of streamer 6, or via a wireless system that can communicate via antenna 240 and transceiver 238 (collectively described as communications conduit 246).

According to further embodiments, user console 235 provides a means for personnel to enter commands and configuration into system 200 (e.g., via a keyboard, buttons, switches, touch screen and/or joy stick). Display device 226 can be used to show: streamer 6 position; visual representations of acquired data; source 4 and receiver 14 status information; survey information; and other information important to the seismic data acquisition process. Source and receiver interface unit 202 can receive the hydrophone seismic data from receiver 14 though streamer communication conduit 248 (discussed above) that can be part of streamer 6, as well as streamer 6 position information from birds 13; the link is bi-directional so that commands can also be sent to birds 13 to maintain proper streamer positioning. Source and receiver interface unit 202 can also communicate bi-directionally with sources 4 through the streamer communication conduit 248 that can be part of streamer 6. Excitation signals, control signals, output signals and status information related to source 4 can be exchanged by streamer communication conduit 248 between system 200 and source 4.

Bus 204 allows a data pathway for items such as: the transfer and storage of data that originate from either the source sensors or streamer receivers; for processor 208 to access stored data contained in data storage unit memory 232; for processor 208 to send information for visual display to display 226; or for the user to send commands to system operating programs/software 236 that might reside in either the processor 208 or the source and receiver interface unit 202.

System 200 can be used to implement method 100 for determining a true-azimuth 3D internal multiple model without subsurface information according to an embodiment, and for substantially eliminating the influence of said true-azimuth 3D internal multiple reflections in geographical area of interest without the a priori knowledge of subsurface information according to an embodiment according to an embodiment. Hardware, firmware, software or a combination thereof may be used to perform the various steps and operations described herein. According to an embodiment, software 236 for carrying out the above discussed steps can be stored and distributed on multi-media storage devices such as devices 216, 218, 220, 224, 234, and/or 237 (described above) or other form of media capable of portably storing information (e.g., universal serial bus (USB) flash drive 426). These storage media may be inserted into, and read by, devices such as the CD-ROM drive 414, the disk drive 412, among other types of software storage devices.

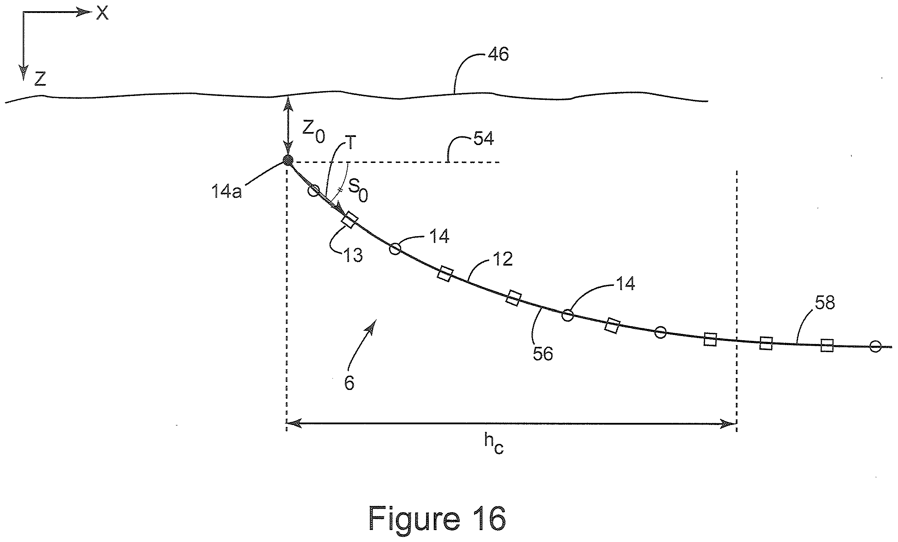

The above embodiments were discussed without specifying what type of seismic receivers 14 are used to record the seismic data. In this sense, it is known in the art to use, for a marine seismic survey, streamers 6 that are towed by one or more vessels/ships 2 and the streamers 6 include seismic receivers/detectors 14. The streamers 6 can be horizontal or slanted or having a curved profile as illustrated in Figure 16.

The curved streamer 6 of Figure 16 includes a body or cable 12 having a predetermined length; plural detectors 14 provided along the body 12; and plural birds 13 provided along body 12 for maintaining the selected curved profile. Curved streamer 6 is configured to flow underwater when towed such that the plurality of detectors 14 are distributed along the curved profile. The curved profile can also be described by as parameterized curve, e.g., a curve described by (i) a depth $z0$ of a first detector 14 (measured from the water surface 46), (ii) a slope $s0$ of a first portion T of body 12 with an axis 54 parallel with water surface 46, and (iii) a predetermined horizontal distance hc between the first detector 14a and an end of the curved profile. It should be noted that not the entire streamer 6 has to have the curved profile. In other words, the curved profile should not be construed to always apply to the entire length of streamer 6. While this situation is possible, the curved profile may be applied only to a first portion 56 of streamer 6. In other words, streamer 6 can have (i) only a first portion 56 having the curved profile or (ii) a first portion 56 having the curved profile and a second portion 58 having a flat profile, the two portions being attached to each other.

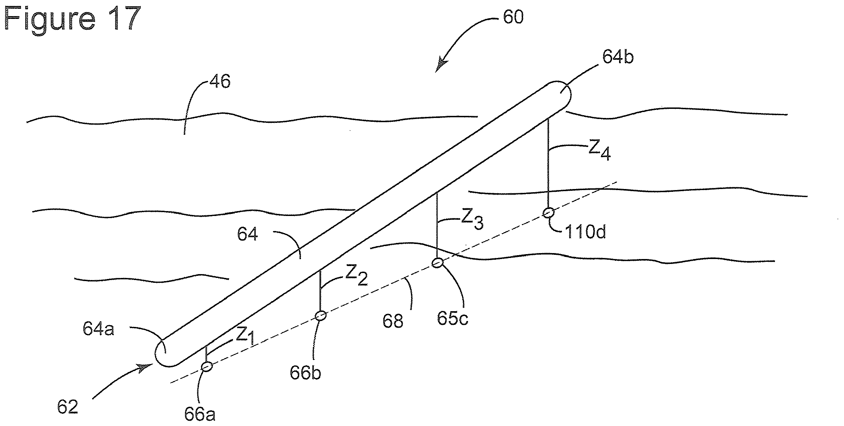

Further, the above embodiments may be used with multi-level source 60. Figure 17 illustrates multi-level source 60 for use with marine seismic exploration system 10 shown in Figure 1 according to an embodiment. Multi-level source 60 has one or more sub-arrays 62. The first sub-array 62 has a float 64 that is configured to float at the water surface 46 or underwater at a predetermined depth. Plural source points 66a-d are suspended from the float 64 in a known manner. A first source point 66a may be suspended closest to the head 64a of the float 64, at a first depth z1. A second source point 66b may be suspended next, at a second depth z2, different from z1. A third source point 66c may be suspended next, at a third depth z3, different from z1 and z2, and so on. Figure 17 shows, for simplicity, only four source points 66a-d, but an actual implementation may have any desired number of source points 66. In one application, because source points 66 can be distributed at different depths, the source points 66 at the different depths are not simultaneously activated. In other words, the source array is synchronized, i.e., a deeper source point 66 is activated later in time (e.g., 2 ms for 3 m depth difference when the speed of sound in water is 1500 m/s) such that corresponding sound signals produced by the plural source points 66 coalesce, and thus, the overall sound signal produced by the source array appears as being a single sound signal.

The depths z1 to z4 of the source points of the first sub-array 62 can obey various relationships. In one application, the depths of source points 66 increase from head 64a toward the tail 64b of float 64, i.e., $z1 < z2 < z3 < z4$. In another application, the depths of source points 66 decrease from head 64a to tail 64b of float 66. In another application, source points 66 are slanted, i.e., provided on an imaginary line 68. In still another application, line 68 is a straight line. In yet another application, line 68 is a curved line, e.g., part of a parabola, circle, hyperbola, etc. In one application, the depth of the first source point 66a for the sub-array 62 is about 5 m and the largest depth of the last source point 66d is about 8 m. In a variation of this embodiment, the depth range is between about 8.5 and about 10.5 m or between about 11 and about 14 m. In another variation of this embodiment, when line 68 is straight, the depths of the source points 66 increase by 0.5 m from a first source point to an adjacent source point. Those skilled in the art would recognize that these ranges are exemplary and these numbers may vary from survey to survey. A common feature of all these embodiments is that source points 66 have variable depths so that a single sub-array 62 exhibits multiple-level source points 66.

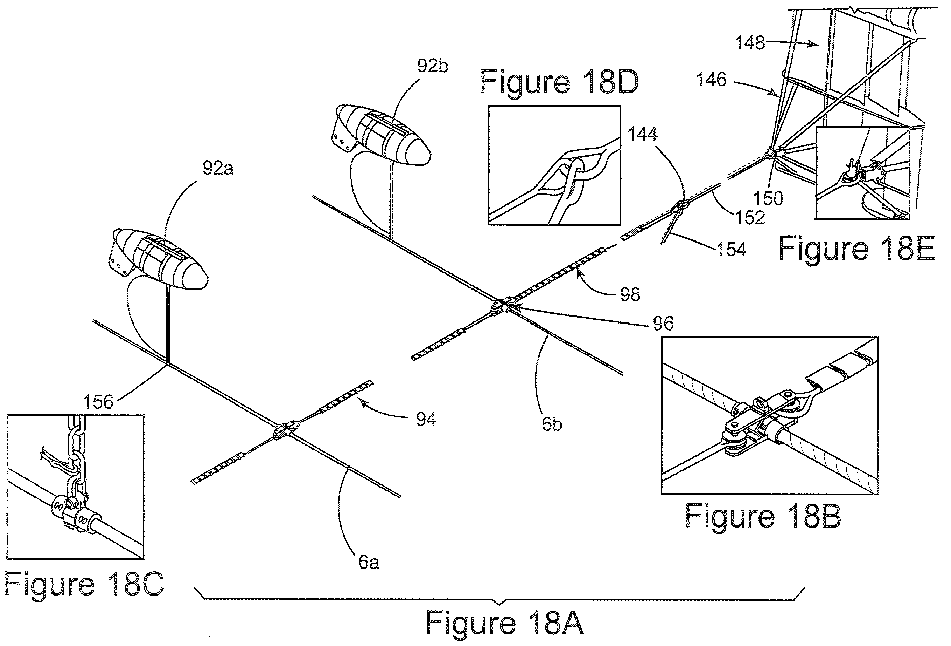

Figures 18A through 18E illustrate a configuration of at least two streamers 6a, 6b for use in the marine seismic exploration system 10 shown in Figure 1. In Figures 18A through 18E, a particular configuration of first and second streamers 6a, 6b are shown that illustrate several exemplary devices that assist in maintaining directional control and stability of streamers 6 in marine exploration system 10. The devices include spread ropes 94, that separate streamers 6, bend restrictors 96 that join spread ropes 94 to streamers 6, and spurline 98, which connects streamer 6b to 3-Eye splice 144, which attaches to bridle block 150 and deflector 148. At least one purpose of deflector 148 is to provide a force to said plurality of streamers 6 to maintain directional stability and control. A close up view of bridle block 150 is shown in Figure 18E. A close up view of 3-Eye splice is shown in Figure 18D. A close up view of bend restrictor 96 is shown in Figure 18B. Head buoys 92a, 92b provide a visual indication of the location of streamers 6, and they are connected to streamers 6 by restrictors 156, a close up view of which is shown in Figure 18C.

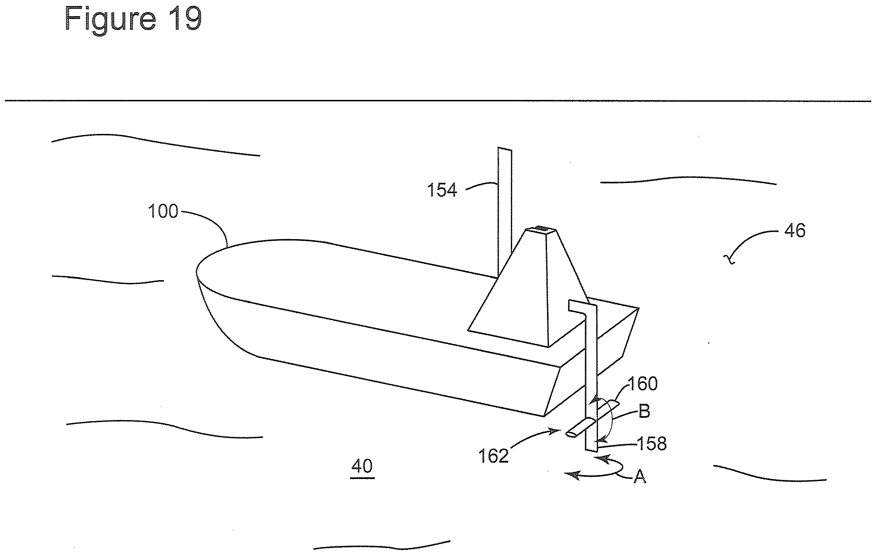

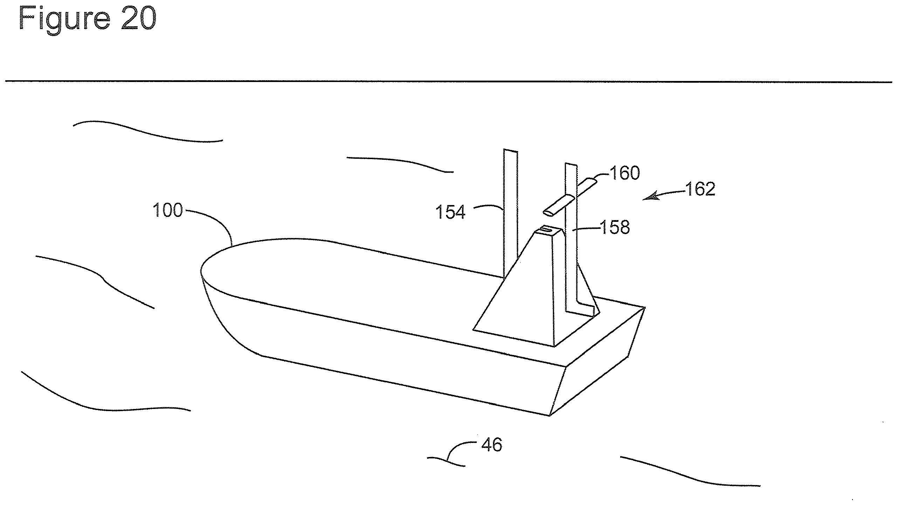

Figure 19 illustrates tail-buoy 100 for use with marine seismic exploration system 10 shown in Figure 1 with ballasted keel 162 shown in the extended position, and Figure 20 illustrates tail-buoy 100 for use with marine seismic exploration system 10 shown in Figure 1 with ballasted keel shown 162 in the retracted position. The purpose of tail-buoy 100 is to (a) provide a visual indicator of the end of streamers 6, and (b) to assist in maintaining directional stability and control of streamers 6. This is especially true with Broadseis streamer configurations. In order to accomplish both functions, it is necessary to maintain directional control of tail-buoy 100 in much the same manner as is done with birds 13. Therefore, ballasted keel 162 with pitch and yaw stabilizers 160, 158 have been added. Yaw stabilizer 158 comprises most of ballasted keel 162, as it is shown to be the vertical component that can be controlled much in the same manner as a rudder for a boat. That is, when it is determined to have tail-buoy 100 turn to the left, directional controls are sent to it and received at navigation mast 154 (which contains power sources, signal processing circuitry, and so on, a detailed description of which has been omitted for the dual purposes of clarity and brevity), so that yaw stabilizer 158 turns to the left, causing the nose of tail-buoy 100 to swing to the left as water passes around yaw stabilizer 158, as those of ordinary skill in the art can appreciate. The same general principles apply when it is desired to turn tail-buoy 100 to the right. Pitch stabilizer 160 assists in maintaining direction control in much the same manner, but is used to impart a downward or up-ward force on the body of tail-buoy 100 with respect to the surrounding water. According to an alternate embodiment, pitch stabilizer 160 can be made fixed and not controllable by remote command. When not needed, or for storage purposes, ballasted keel 164 can be stored in a retracted position, as shown in Figure 20. Additional motors, servos, and appropriate command and control circuitry can be provided to effectuate those functions, or the same can be accomplished manually, without additional circuitry and so on; when stored, ballasted keel 162 is folded up and a pin keeps in the retracted condition, and when placed in the water, the pin is removed, ballasted keel 162 folds down, the ballast drives ballasted keel 162 in the down position.

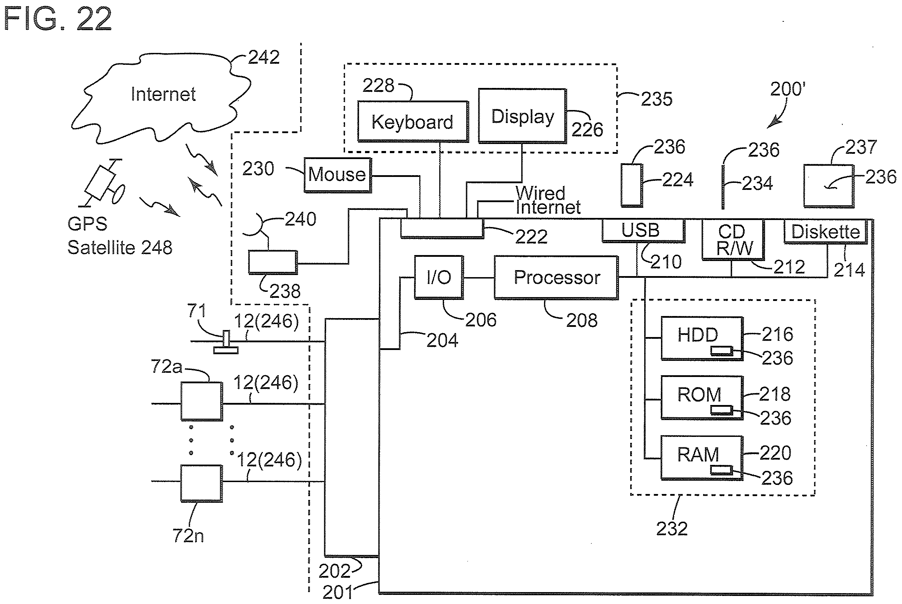

Figure 22 illustrates a seismic data acquisition system 200' suitable for use to implement a method for true azimuth three-dimensional (3d) internal multiples attenuation without apriori knowledge of multiple-generating interfaces according to an embodiment.

Figure 22 illustrates a portion of land seismic data acquisition system (land system) 200' suitable for use to implement a method for true azimuth three-dimensional (3d) internal multiples attenuation without apriori knowledge of multiple-generating interfaces according to an embodiment. As those of skill in the art can appreciate, while the seismic data signals themselves can represent vastly different types of underground structure, and while the signal processing can, therefore, be vastly different as a consequence, the basic equipment remains essentially the same, and thus, Figure 22 closely resembles Figure 14, and includes many of the same components. As a result, in fulfillment of the dual goals of clarity and brevity, a detailed discussion of land system 200' will be omitted (as like objects in Figure 22 have been referenced similarly to those in Figure 14), other than to note that the source of the signal source/vibrators 62 and receivers 6a-n communicate to source/receiver interface 202 via cables 80/246, but these are similar to streamers 6/246 in terms of command, control and communications functions.

It should be noted in the embodiments described herein that these techniques can be applied in either an "offline", e.g., at a land-based data processing center or an "online" manner, i.e., in near real time while on-board the seismic vessel. For example, true azimuth three-dimensional (3d) internal multiples attenuation without apriori knowledge of multiple-generating interfaces can occur as the seismic data is recorded on-board the seismic vessel. In this case, it is possible for internal multiples free-data to be generated as a measure of the quality of the sampling run.

As also will be appreciated by one skilled in the art, the various functional aspects of the embodiments may be embodied in a wireless communication device, a telecommunication network, as a method or in a computer program product. Accordingly, the embodiments may take the form of an entirely hardware embodiment or an embodiment combining hardware and software aspects. Further, the embodiments may take the form of a computer program product stored on a computer-readable storage medium having computer-readable instructions embodied in the medium. Any suitable computer-readable medium may be utilized, including hard disks, CD-ROMs, digital versatile discs (DVDs), optical storage devices, or magnetic storage devices such a floppy disk or magnetic tape. Other non-limiting examples of computer-readable media include flash-type memories or other known types of memories.

Further, those of ordinary skill in the art in the field of the embodiments can appreciate that such functionality can be designed into various types of circuitry, including, but not limited to field programmable gate array structures (FPGAs), application specific integrated circuitry (ASICs), microprocessor based systems, among other types. A detailed discussion of the various types of physical circuit implementations does not substantively aid in an understanding of the embodiments, and as such has been omitted for the dual purposes of brevity and clarity. However, as well known to those of ordinary skill in the art, the systems and methods discussed herein can be implemented as discussed, and can further include programmable devices.

Such programmable devices and/or other types of circuitry as previously discussed can include a processing unit, a system memory, and a system bus that couples various system components including the system memory to the processing unit. The system bus can be any of several types of bus structures including a memory bus or memory controller, a peripheral bus, and a local bus using any of a variety of bus architectures. Furthermore, various types of computer readable media can be used to store programmable instructions. Computer readable media can be any available media that can be accessed by the processing unit. By way of example, and not limitation, computer readable media can comprise computer storage media and communication media. Computer storage media includes volatile and non-volatile as well as removable and non-removable media implemented in any method or technology for storage of information such as computer readable instructions, data structures, program modules or other data. Computer storage media includes, but is not limited to, RAM, ROM, EEPROM, flash memory or other memory technology, CDROM, digital versatile disks (DVD) or other optical disk storage, magnetic cassettes, magnetic tape, magnetic disk storage or other magnetic storage devices, or any other medium which can be used to store the desired information and which can be accessed by the processing unit. Communication media can embody computer readable instructions, data structures, program modules or other data in a modulated data signal such as a carrier wave or other transport mechanism and can include any suitable information delivery media.

The system memory can include computer storage media in the form of volatile and/or non-volatile memory such as read only memory (ROM) and/or random access memory (RAM). A basic input/output system (BIOS), containing the basic routines that help to transfer information between elements connected to and between the processor, such as during start-up, can be stored in memory. The memory can also contain data and/or program modules that are immediately accessible to and/or presently being operated on by the processing unit. By way of non-limiting example, the memory can also include an operating system, application programs, other program modules, and program data.

The processor can also include other removable/non-removable and volatile/non-volatile computer storage media. For example, the processor can access a hard disk drive that reads from or writes to non-removable, non-volatile magnetic media, a magnetic disk drive that reads from or writes to a removable, non-volatile magnetic disk, and/or an optical disk drive that reads from or writes to a removable, non-volatile optical disk, such as a CD-ROM or other optical media. Other removable/non-removable, volatile/non-volatile computer storage media that can be used in the operating environment include, but are not limited to, magnetic tape cassettes, flash memory cards, digital versatile disks, digital video tape, solid state RAM, solid state ROM and the like. A hard disk drive can be connected to the system bus through a non-removable memory interface such as an interface, and a magnetic disk drive or optical disk drive can be connected to the system bus by a removable memory interface, such as an interface.

The embodiments discussed herein can also be embodied as computer-readable codes on a computer-readable medium. The computer-readable medium can include a computer-readable recording medium and a computer-readable transmission medium. The computer-readable recording medium is any data storage device that can store data which can be thereafter read by a computer system. Examples of the computer-readable recording medium include read-only memory (ROM), random-access memory (RAM), CD-ROMs and generally optical data storage devices, magnetic tapes, flash drives, and floppy disks. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to, when implemented in suitable electronic hardware, accomplish or support exercising certain elements of the appended claims can be readily construed by programmers skilled in the art to which the embodiments pertains.

The disclosed embodiments provide a source array, computer software, and a method for true azimuth three-dimensional (3d) internal multiples attenuation without apriori knowledge of multiple-generating interfaces according to embodiments. It should be understood that this description is not intended to limit the embodiments. On the contrary, the embodiments are intended to cover alternatives, modifications, and equivalents, which are included in the spirit and scope of the embodiments as defined by the appended claims. Further, in the detailed description of the embodiments, numerous specific details are set forth to provide a comprehensive understanding of the claimed embodiments. However, one skilled in the art would understand that various embodiments may be practiced without such specific details.

Although the features and elements of the embodiments are described in the embodiments in particular combinations, each feature or element can be used alone, without the other features and elements of the embodiments, or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims.

The above-described embodiments are intended to be illustrative in all respects, rather than restrictive, of the embodiments. Thus the embodiments are capable of many variations in detailed implementation that can be derived from the description contained herein by a person skilled in the art. No element, act, or instruction used in the description of the present application should be construed as critical or essential to the embodiments unless explicitly described as such. Also, as used herein, the article "a" is intended to include one or more items.

**Claims**

1. A method for substantially eliminating true-azimuth three dimensional (3D) internal multiple reflections, the method being **characterized in that** it comprises:

   defining (108) M upper windows that correspond physically to a space below a plurality of seismic data receivers and that include a geographical area of interest, and a pair of lower windows (112) that are below the M upper windows;
   defining (114) a first set of surface apertures and a second set of surface apertures in a different location from said first set of surface apertures;
   allocating (116) seismic data to each of said windows using the first and second sets of surface apertures, so as to obtain segmented seismic data;
   determining (120) a total internal 3D multiple model based on an iteratively generated internal 3D multiple model using the segmented seismic data; and
   subtracting said total internal 3D multiple model from said seismic data to substantially eliminate the influence of internal multiples in determining the geography of the geographical area of interest.

2. The method according to claim 1, wherein the step of allocating comprises:

   generating a series of seismic signals by a plurality of source transmitters;

receiving raw data at a plurality of receivers based on the generated series of seismic signals and saving the same as said seismic data;

defining said $M$ upper windows as $W_{j(N)}$ that corresponds physically to a space below the plurality of receivers and includes a geographical area of interest;

defining said pair of lower windows as $W_k$ and $W_l$, both of which are lower than said set of M upper windows;

assigning portions of said seismic data to each of said two lower windows, such that $D_{wk}$ is defined as segmented data that is muted off outside first lower window $W_k$. and $D_{wl}$ is defined as segmented data that is muted off outside second lower window $W_l$; and

assigning portions of said seismic data to said set of $M$ upper windows, such that $D_{wj(N)}$ is defined as segmented data that is muted off outside respective windows $W_{j(N)}$.

3. The method according to claim 2, wherein the step of determining a total internal 3D multiple model comprises:

iteratively generating said internal 3D multiple model as $M(x_r,y_r|x_s,y_s;f)(N)$ using said segmented data $D_{wj(N)}$, $D_{wk}$, and $D_{wl}$; and

summing all of the iteratively generated internal 3D multiple models to create a total internal 3D multiple model.

4. The method according to claim 3, wherein the step of iteratively generating said total internal 3D multiple model $M(x_r,y_r|x_s,y_s;f)(N)$ using said segmented data $D_{wj(N)}$, $D_{wk}$, and $D_{wl}$ comprises:

defining a first aperture location with a first set of X and Y dimensions, and defining a second aperture location with a second set of X and Y dimensions; and

convoluting segmented data $D_{wk}$ with a complex conjugate of the segmented data $D_{wj(N)}$ the product of which is convoluted with segmented data $D_{wl}$ to create first convoluted data, and wherein the first convoluted data is summed as a function of x position with respect to the first aperture, then summed as a function of y position with respect to the first aperture, then summed as a function of x position with respect to the second aperture, then summed as a function of y position with respect to the second aperture, and repeating the same convolution and summing for each of the M upper windows, $W_{j(N)}$.

5. The method according to claim 4, wherein the step of defining a first and second aperture comprises:

determining that a first trace originates from a source and is reflected to a first position within a second aperture;

determining that a second trace originates from a first position in the first aperture and is reflected to the first position in the second trace;

determining that a third trace originates from the first position in the first aperture and is reflected to a first of the plurality of receivers; and

minimizing a difference in each of azimuth, offset, and midpoint of the three traces.

6. The method according to claim 4, wherein the step defining a first and second aperture comprises:

determining that a first trace originates from a source and is reflected to a first position within a second aperture;

determining that a second trace originates from a first position in the first aperture and is reflected to the first position in the second trace;

determining that a third trace originates from the first position in the first aperture and is reflected to a first of the plurality of receivers; and

minimizing a weighted sum of each of the azimuth, offset and midpoints of each of the three traces.

7. The method according to claim 6, wherein the step of segmenting seismic data for the upper window, $D_{wj(N)}$ comprises:

determining that if seismic data does not exist at one or more of a plurality of receivers for the defined window $W_{j(N)}$, then interpolating data from one or more closest receivers to generate $D_{wj(N)}$, wherein

the step of interpolating further includes rotating each of the three traces about respective midpoints of each of the three traces.

8. The method according to claim 2, wherein the step of assigning portions of said seismic data to said upper window, $D_{wj(N)}$ comprises:

determining that if seismic data does not exist at one or more of a plurality of receivers for the defined window $W_{j(N)}$, then interpolating data from one or more closest receivers to generate $D_{wj(N)}$.

9. The method according to claim 8, wherein said method of interpolating comprises:
performing differential normal move out on said received data to generate said $D_{wj(N)}$.

10. The method according to claim 2, wherein the step of assigning portions of said seismic data to said upper window, $D_{wj(N)}$ comprises:
determining that data does exists at one or more of a plurality of receivers for the defined window $W_{j(N)}$ and using said data as $D_{wj(N)}$.

11. The method according to claim 2, wherein the step of defining said set of M upper windows $W_{j(N)}$ is based on respective travel times of the series of seismic signals from the plurality of sources to the plurality of receivers, and further wherein each of the M upper window time frames is substantially similar in duration.

12. A seismic system for substantially eliminating true-azimuth three dimensional (3D) internal multiple reflections, the system being **characterized in that** it comprises:
a processor (208) configured to:

define (108) M upper windows that correspond physically to a space below a plurality of seismic data receivers and that includes a geographical area of interest, and a pair of lower windows (112) that are below the *M* upper windows,
define (114) a first set of surface apertures and a second set of surface apertures in a different location from said first set of surface apertures,
allocate (116) seismic data to each of said windows using the first and second sets of surface apertures so as to obtain segmented seismic data,
determine (120) a total internal 3D multiple model based on an iteratively generated internal 3D multiple model using the segmented seismic data, and
subtract said total internal 3D multiple model from said seismic data to substantially eliminate the influence of internal multiples in determining the geography of the geographical area of interest.

13. The system according to claim 12, further comprising:

a plurality of source transmitters configured to generate a series of seismic signals; and
a plurality of receivers configured to receive raw data based on the generated series of seismic signals and save the same as said seismic data, and wherein said processor is further configured to:

define said set of *M* upper windows as $W_{j(N)}$ that corresponds physically to a space below the plurality of receivers and includes the geographical area of interest,
define said pair of lower windows as $W_k$ and $W_l$, both of which are lower than said set of *M* upper windows,
assign portions of said seismic data to each of said two lower windows, such that $D_{wk}$ is defined as segmented data that is muted off outside first lower window $W_k$. and $D_{wl}$ is defined as segmented data that is muted off outside second lower window $W_l$, and
assign portions of said seismic data to said set of *M* upper windows, such that $D_{wj(N)}$ is defined as segmented data that is muted off outside respective windows $W_{j(N)}$.

14. The system according to claim 13, wherein when the processor determines a total internal 3D multiple model, the processor is further configured to

iteratively generate said internal 3D multiple model as $M(x_r, y_r | x_s, y_s; f)(N)$ using said segmented data $D_{wj(N)}$, $D_{wk}$, and $D_{wl}$, and
sum all of the iteratively generated internal 3D multiple models to create a total internal 3D multiple model.


**Patentansprüche**

1. Verfahren zum weitgehenden Beseitigen von dreidimensionalen (3D) internen Vielfachreflexionen des wahren Azimuts, wobei das Verfahren **dadurch gekennzeichnet ist, dass** es umfasst:

Definieren (108) M Oberfenster, die physisch einem Raum unterhalb einer Mehrzahl seismischer Datenempfänger entsprechen und ein interessierendes geografisches Gebiet umfassen, und ein Paar Unterfenster (112), die unterhalb der M Oberfenster liegen,

Definieren (114) eines ersten Satzes mit Oberflächenaperturen und eines zweiten Satzes mit Oberflächenaperturen an einem Standort, der sich vom ersten Satz Oberflächenaperturen unterscheidet,

Zuweisen (116) seismischer Daten zu jedem der Fenster unter Verwendung des ersten und zweiten Satzes Oberflächenabperturen, um so segmentierte seismische Daten zu erhalten,

Bestimmen (120) eines totalen internen 3D-Vielfachreflexionsmodells aufgrund eines iterative erzeugten internen 3D-Vielfachreflexionsmodells unter Verwendung der segmentierten seismischen Daten und

Subtrahieren des totalen 3D-Vielfachreflexionsmodells von den seismischen Daten, um den Einfluss interner Vielfachreflexionen bei der Bestimmung der Geografie des interessierenden geografischen Gebiets im Wesentlichen zu beseitigen.

2. Verfahren nach Anspruch 1, wobei der Schritt des Zuweisens umfasst:

Erzeugen einer Reihe seismischer Signale durch eine Mehrzahl Quellsender,

Empfangen von Rohdaten an einer Mehrzahl Empfänger aufgrund der erzeugten Reihen seismischer Signale und Speichern der Rohdaten als seismischer Daten,

Definieren der M Oberfenster als $W_{j(N)}$, was physisch einem Raum unterhalb der Mehrzahl Empfänger entspricht und ein interessierendes geografisches Gebiet umfasst,

Definieren des Paares Unterfenster als $W_k$ und $W_l$, die beide tiefer liegen als der Satz M Oberfenster,

Zuweisen von Teilen der seismischen Daten zu jedem der beiden Unterfenster, so dass $D_{wk}$ als segmentierte Daten definiert wird, die außerhalb des ersten Unterfensters $W_k$ stummgeschaltet werden, und $D_{wl}$ als segmentierte Daten definiert wird, die außerhalb des zweiten Unterfensters $W_l$ stummgeschaltet werden, und

Zuweisen von Teilen der seismischen Daten zum Satz M Oberfenster, so dass $D_{wj(N)}$ als segmentierte Daten definiert wird, die außerhalb jeweiliger Fenster $W_{j(N)}$ stummgeschaltet werden.

3. Verfahren nach Anspruch 2, wobei der Schritt des Bestimmens eines totalen internen 3D-Vielfachreflexionsmodells umfasst:

iteratives Erzeugen des internen 3D-Vielfachreflexionsmodells als $M(x_r, y_r, x_s, y_s; f)(N)$ anhand der segmentierten Daten $D_{Wj(N)}$, $D_{wk}$, and $D_{wl}$ und

Summieren aller iterativ erzeugten internen 3D-Vielflachreflexionsmodelle, um ein totales internes 3D-Vielfachreflexionsmodell zu erzeugen.

4. Verfahren nach Anspruch 3, wobei der Schritt des iterativen Erzeugens des totalen internen 3D-Vielfachreflexionsmodells $M(x_r, y_r, x_s, y_s; f)(N$ anhand der segmentierten Daten $D_{wj(N)}$, $D_{wk}$ und $D_{wl}$ umfasst:

Definieren eines ersten Aperturstandortes mit einem ersten Satz X- und Y-Dimensionen und Definieren eines zweiten Aperturstandortes mit einem zweiten Satz X- und Y-Dimensionen und

Falten segmentierter Daten $D_{wk}$ mit einem komplexen Konjugat der segmentierten Daten $D_{Wj(N)}$, dessen Produkt mit segmentierten Daten $D_{wl}$ gefaltet wird, um erste gefaltete Daten zu erzeugen, und wobei die ersten gefalteten Daten als Funktion der x-Lage in Bezug auf die erste Apertur summiert werden und dann als Funktion der x-Lage in Bezug auf die zweite Apertur summiert werden, und anschließend als Funktion der y-Lage in Bezug auf die zweite Apertur summiert werden, wobei sich das Falten und Summieren für jedes der M Oberfenster $W_{j(N)}$ wiederholt.

5. Verfahren nach Anspruch 4, wobei der Schritt des Definierens einer ersten und zweiten Apertur umfasst:

Bestimmen, dass eine erste Spur von einer Quelle herrührt und auf eine erste Position in einer zweiten Apertur reflektiert wird,

Bestimmen, dass eine zweite Spur von einer ersten Position in der ersten Apertur herrührt und auf die erste Position in der zweiten Spur reflektiert wird,

Bestimmen, dass eine dritte Spur von der ersten Position in der ersten Apertur herrührt und auf einen ersten der Mehrzahl Empfänger reflektiert wird, und

Minimieren eines Unterschieds in jedem von Azimut, Versatz und Mittelpunkt der drei Spuren.

6. Verfahren nach Anspruch 4, wobei der Schritt des Definierens einer ersten und zweiten Apertur umfasst:

Bestimmen, dass eine erste Spur von einer Quelle herrührt und auf eine erste Position in einer zweiten Apertur reflektiert wird,

Bestimmen, dass eine zweite Spur von einer ersten Position in der ersten Apertur herrührt und auf die erste Position in der zweiten Spur reflektiert wird,

Bestimmen, dass eine dritte Spur von der ersten Position in der ersten Apertur herrührt und auf einen ersten der Mehrzahl Empfänger reflektiert wird, und

Minimieren einer gewichteten Summe von jedem von Azimut, Versatz und Mittelpunkt jeder der drei Spuren.

7. Verfahren nach Anspruch 6, wobei der Schritt des Segmentierens seismischer Daten für das Oberfenster $D_{wj(N)}$ umfasst:

Bestimmen, dass, wenn an einem oder mehreren einer Mehrzahl Empfänger für das definierte Fenster $W_{j(N)}$ keine seismischen Daten vorhanden sind, Daten aus mindestens einem am nächsten liegenden Empfänger interpoliert werden, um $D_{Wj(N)}$ zu erzeugen, wobei

der Schritt des Interpolierens ferner umfasst: Rotieren jeder der drei Spuren um jeweilige Mittelpunkte jeder der drei Spuren.

8. Verfahren nach Anspruch 2, wobei der Schritt des Zuweisens von Teilen der seismischen Daten zum Oberfenster $D_{wj(N)}$ umfasst:
Bestimmen, dass, wenn an einem oder mehreren einer Mehrzahl Empfänger für das definierte Fenster $W_{j(N)}$ keine seismischen Daten vorhanden sind, Daten aus mindestens einem am nächsten liegenden Empfänger interpoliert werden, um $D_{Wj(N)}$ zu erzeugen.

9. Verfahren nach Anspruch 8, wobei das Interpolationsverfahren umfasst:
Ausführen eines DNMO (Differential Normal Move Out) an den empfangenen Daten, um das $D_{Wj(N)}$ zu erzeugen.

10. Verfahren nach Anspruch 2, wobei der Schritt des Zuweisens von Teilen der seismischen Daten zum Oberfenster $D_{wj(N)}$ umfasst:
Bestimen, dass an einem oder mehreren einer Mehrzahl Empfänger für das definierte Fenster $W_{j(N)}$ Daten vorhanden sind und Verwenden der Daten als $D_{Wj(N)}$.

11. Verfahren nach Anspruch 2, wobei der Schritt des Definierens des Satzes *M* Oberfenster $W_{j(N)}$ auf jeweiligen Laufzeiten der Reihe von seismischen Signalen aus der Mehrzahl Quellen zur Mehrzahl Empfänger basiert, und ferner wobei jeder der Zeitrahmen der *M* Oberfenster eine im Wesentlichen ähnliche Dauer aufweist.

12. Seismiksystem zum weitgehenden Beseitigen von dreidimensionalen (3D) internen Vielfachreflexionen des wahren Azimuts, wobei das System **dadurch gekennzeichnet ist, dass** es umfasst:
einen Prozessor (208), der konfiguriert ist:

zum Definieren (108) *M* Oberfenster, die physisch einem Raum unterhalb einer Mehrzahl seismischer Datenempfänger entsprechen und ein interessierendes geografisches Gebiet umfassen, und ein Paar Unterfenster (112), die unterhalb der *M* Oberfenster liegen,

zum Definieren (114) eines ersten Satzes mit Oberflächenaperturen und eines zweiten Satzes mit Oberflächenaperturen an einem Standort, der sich vom ersten Satz Oberflächenaperturen unterscheidet,

zum Zuweisen (116) seismischer Daten zu jedem der Fenster unter Verwendung des ersten und zweiten Satzes Oberflächenabperturen, um so segmentierte seismische Daten zu erhalten,

zum Bestimmen (120) eines totalen internen 3D-Vielfachreflexionsmodells aufgrund eines iterative erzeugten internen 3D-Vielfachreflexionsmodells unter Verwendung der segmentierten seismischen Daten und

zum Subtrahieren des totalen 3D-Vielfachreflexionsmodells von den seismischen Daten, um den Einfluss interner Vielfachreflexionen bei der Bestimmung der Geografie des interessierenden geografischen Gebiets im Wesentlichen zu beseitigen.

13. System nach Anspruch 12, ferner umfassend:

eine Mehrzahl Quellsender, die zum Erzeugen einer Reihe seismischer Signale konfiguriert sind, und

eine Mehrzahl Empfänger, die zum Empfangen von Rohdaten aufgrund der erzeugten Reihen seismischer Signale und zum Speichern der Rohdaten als seismischer Daten konfiguriert sind, und wobei der Prozessor ferner konfiguriert ist:

zum Definieren des Satzes $M$ Oberfenster als $W_{j(N)}$, was physisch einem Raum unterhalb der Mehrzahl Empfänger entspricht und das interessierende geografisches Gebiet umfasst,

zum Definieren des Paares Unterfenster als $W_k$ und $W_l$, die beide tiefer liegen als der Satz $M$ Oberfenster,

zum Zuweisen von Teilen der seismischen Daten zu jedem der beiden Unterfenster, so dass Dwk als segmentierte Daten definiert wird, die außerhalb des ersten Unterfensters $W_k$ stummgeschaltet werden, und $D_{wl}$ als segmentierte Daten definiert wird, die außerhalb des zweiten Unterfensters $W_l$ stummgeschaltet werden, und

zum Zuweisen von Teilen der seismischen Daten zum Satz M Oberfenster, so dass $D_{wj(N)}$ als segmentierte Daten definiert wird, die außerhalb jeweiliger Fenster $W_{j(N)}$ stummgeschaltet werden.

**14.** System nach Anspruch 13, wobei, wenn der Prozessor ein totales internes 3D-Vielfachreflexionsmodell bestimmt, der Prozessor ferner konfiguriert ist:

zum iterativen Erzeugen des internen 3D-Vielfachreflexionsmodells als $M(x_r,y_r|x_s,y_s;f)(N)$ anhand der segmentierten Daten $D_{Wj(N)}$, $D_{wk}$, and $D_{wl}$ und

zum Summieren aller iterativ erzeugten internen 3D-Vielflachreflexionsmodelle, um ein gesamtes internes 3D-Vielfachreflexionsmodell zu erzeugen.

## Revendications

**1.** Procédé pour éliminer sensiblement des réflexions de multiples internes en trois dimensions (3D) sur azimut réel, le procédé étant **caractérisé en ce qu'**il comprend les étapes ci-dessous consistant à :

définir (108) « $M$ » fenêtres supérieures qui correspondent physiquement à un espace situé sous une pluralité de récepteurs de données sismiques et qui incluent une zone géographique d'intérêt, et une paire de fenêtres inférieures (112) qui sont situées sous les « $M$ » fenêtres supérieures ;

définir (114) un premier ensemble d'ouvertures de surface et un second ensemble d'ouvertures de surface situé dans un emplacement différent de celui dudit premier ensemble d'ouvertures de surface ;

allouer (116) des données sismiques à chacune desdites fenêtres en utilisant les premier et second ensembles d'ouvertures de surface, de manière à obtenir des données sismiques segmentées ;

déterminer (120) un modèle de multiples 3D internes total sur la base d'un modèle de multiples 3D internes généré de manière itérative en utilisant les données sismiques segmentées ; et

soustraire ledit modèle de multiples 3D internes total desdites données sismiques en vue d'éliminer sensiblement l'influence de multiples internes dans la détermination de la géographie de la zone géographique d'intérêt.

**2.** Procédé selon la revendication 1, dans lequel l'étape d'allocation comprend les étapes ci-dessous consistant à :

générer une série de signaux sismiques par le biais d'une pluralité d'émetteurs sources ;

recevoir des données brutes au niveau d'une pluralité de récepteurs, sur la base de la série de signaux sismiques générée, et enregistrer celles-ci en tant que des données sismiques ;

définir lesdites « $M$ » fenêtres supérieures en tant que « $W_{j(N)}$ » correspondant physiquement à un espace situé sous la pluralité de récepteurs et incluant une zone géographique d'intérêt ;

définir ladite paire de fenêtres inférieures en tant que les fenêtres « $W_k$ » et « $W_l$ », lesquelles sont toutes deux inférieures audit ensemble de « $M$ » fenêtres supérieures ;

affecter des parties desdites données sismiques à chacune desdites deux fenêtres inférieures, de sorte que « $D_{wk}$ » est défini comme des données segmentées qui sont mises en sourdine en dehors de la première fenêtre inférieure « $W_k$ », et que « $D_{wl}$ » est défini comme des données segmentées qui sont mises en sourdine en dehors de la seconde fenêtre inférieure « $W_l$ » ; et

affecter des parties desdites données sismiques audit ensemble de « $M$ » fenêtres supérieures, de sorte que « $D_{wj(N)}$ » est défini comme des données segmentées qui sont mises en sourdine en dehors de fenêtres respectives « $W_{j(N)}$ ».

**3.** Procédé selon la revendication 2, dans lequel l'étape de détermination d'un modèle de multiples 3D internes total comprend les étapes ci-dessous consistant à :

générer de manière itérative ledit modèle de multiples 3D internes en tant que « $M(x_r, y_r|x_s, y_s;f)(N)$ » en utilisant lesdites données segmentées « $D_{wj(N)}$ », « $D_{wk}$ », et « $D_{wl}$ » ; et

additionner tous les modèles de multiples 3D internes générés de manière itérative, en vue de créer un modèle de multiples 3D internes total.

**4.** Procédé selon la revendication 3, dans lequel l'étape de génération itérative dudit modèle de multiples 3D internes total « $M(x_r, y_r|x_s, y_s;f)(N)$ » en utilisant lesdites données segmentées « $D_{wj(N)}$ », « $D_{wk}$ », et « $D_{wl}$ » comprend les étapes ci-dessous consistant à :

définir un premier emplacement d'ouverture avec un premier ensemble de dimensions « X » et « Y », et définir un second emplacement d'ouverture avec un second ensemble de dimensions « X » et « Y » ; et
convoluer des données segmentées « $D_{wk}$ » avec un conjugué complexe des données segmentées « $D_{wj(N)}$ » dont le produit est convolué avec des données segmentées « $D_{wl}$ », en vue de créer des premières données convoluées, et dans lequel les premières données convoluées sont additionnées en fonction d'une position « x » par rapport à la première ouverture, puis sont additionnées en fonction d'une position « y » par rapport à la première ouverture, puis sont additionnées en fonction d'une position « x » par rapport à la seconde ouverture, puis sont additionnées en fonction d'une position « y » par rapport à la seconde ouverture, et répéter la même étape de convolution et d'addition pour chacune des « M » fenêtres supérieures, « $W_{j(N)}$ ».

**5.** Procédé selon la revendication 4, dans lequel l'étape de définition d'une première ouverture et d'une seconde ouverture comprend les étapes ci-dessous consistant à :

déterminer qu'une première trace provient d'une source et est réfléchie vers une première position au sein d'une seconde ouverture ;
déterminer qu'une deuxième trace provient d'une première position dans la première ouverture et est réfléchie vers la première position dans la deuxième trace ;
déterminer qu'une troisième trace provient de la première position dans la première ouverture et est réfléchie vers un premier récepteur de la pluralité de récepteurs ; et
minimiser une différence, dans chacun parmi l'azimut, le décalage et le point médian, des trois traces.

**6.** Procédé selon la revendication 4, dans lequel l'étape de définition d'une première ouverture et d'une seconde ouverture comprend les étapes ci-dessous consistant à :

déterminer qu'une première trace provient d'une source et est réfléchie vers une première position au sein d'une seconde ouverture ;
déterminer qu'une deuxième trace provient d'une première position dans la première ouverture et est réfléchie vers la première position dans la deuxième trace ;
déterminer qu'une troisième trace provient de la première position dans la première ouverture et est réfléchie vers un premier récepteur de la pluralité de récepteurs ; et
minimiser une somme pondérée de chacun parmi l'azimut, le décalage et les points médians de chacune des trois traces.

**7.** Procédé selon la revendication 6, dans lequel l'étape de segmentation de données sismiques pour la fenêtre supérieure, « $D_{wj(N)}$ », comprend les étapes ci-dessous consistant à :
déterminer que si des données sismiques n'existent pas au niveau d'un ou plusieurs récepteurs d'une pluralité de récepteurs pour la fenêtre définie « $W_{j(N)}$ », il convient d'interpoler des données provenant d'un ou plusieurs récepteurs les plus proches en vue de générer la fenêtre « $D_{wj(N)}$ », dans lequel
l'étape d'interpolation inclut en outre l'étape de rotation de chacune des trois traces autour de points médians respectifs de chacune des trois traces.

**8.** Procédé selon la revendication 2, dans lequel l'étape d'affectation de parties desdites données sismiques à ladite fenêtre supérieure, « $D_{wj(N)}$ », comprend l'étape ci-dessous consistant à :
déterminer que si des données sismiques n'existent pas au niveau d'un ou plusieurs récepteurs d'une pluralité de récepteurs pour la fenêtre définie « $W_{j(N)}$ », il convient d'interpoler des données provenant d'un ou plusieurs récepteurs les plus proches en vue de générer la fenêtre « $D_{wj(N)}$ ».

**9.** Procédé selon la revendication 8, dans lequel ledit procédé d'interpolation comprend l'étape ci-dessous consistant à :
mettre en œuvre un déplacement normal différentiel sur lesdites données reçues en vue de générer ladite fenêtre « $D_{wj(N)}$ ».

**10.** Procédé selon la revendication 2, dans lequel l'étape d'affectation de parties desdites données sismiques à ladite fenêtre supérieure, « $D_{wj(N)}$ », comprend l'étape ci-dessous consistant à :

déterminer que des données existent effectivement au niveau d'un ou plusieurs récepteurs d'une pluralité de récepteurs pour la fenêtre définie « $W_{j(N)}$ » et utiliser lesdites données en tant que « $D_{wj(N)}$ ».

**11.** Procédé selon la revendication 2, dans lequel l'étape de définition dudit ensemble de « $M$ » fenêtres supérieures « $W_{j(N)}$ » est basée sur des temps de parcours respectifs de la série de signaux sismiques de la pluralité de sources vers la pluralité de récepteurs, et dans lequel en outre les trames temporelles des « $M$ » fenêtres supérieures sont chacune sensiblement similaires en termes de durée.

**12.** Système sismique destiné à éliminer sensiblement des réflexions de multiples internes en trois dimensions (3D) sur azimut réel, le système étant **caractérisé en ce qu'**il comprend :

un processeur (208) configuré de manière à :

définir (108) « $M$ » fenêtres supérieures qui correspondent physiquement à un espace situé sous une pluralité de récepteurs de données sismiques et qui incluent une zone géographique d'intérêt, et une paire de fenêtres inférieures (112) qui sont situées sous les « $M$ » fenêtres supérieures ;

définir (114) un premier ensemble d'ouvertures de surface et un second ensemble d'ouvertures de surface situé dans un emplacement différent de celui dudit premier ensemble d'ouvertures de surface ;

allouer (116) des données sismiques à chacune desdites fenêtres en utilisant les premier et second ensembles d'ouvertures de surface, de manière à obtenir des données sismiques segmentées ;

déterminer (120) un modèle de multiples 3D internes total sur la base d'un modèle de multiples 3D internes généré de manière itérative en utilisant les données sismiques segmentées ; et

soustraire ledit modèle de multiples 3D internes total desdites données sismiques en vue d'éliminer sensiblement l'influence de multiples internes dans la détermination de la géographie de la zone géographique d'intérêt.

**13.** Système selon la revendication 12, comprenant en outre :

une pluralité d'émetteurs sources configurés de manière à générer une série de signaux sismiques ; et

une pluralité de récepteurs configurés de manière à recevoir des données brutes sur la base de la série de signaux sismiques générée, et à enregistrer celles-ci en tant que des données sismiques ; et dans lequel ledit processeur est en outre configuré de manière à :

définir lesdites « M » fenêtres supérieures en tant que « $W_{j(N)}$ » correspondant physiquement à un espace situé sous la pluralité de récepteurs et incluant la zone géographique d'intérêt ;

définir ladite paire de fenêtres inférieures en tant que les fenêtres « $W_k$ » et « $W_l$ », lesquelles sont toutes deux inférieures audit ensemble de « $M$ » fenêtres supérieures ;

affecter des parties desdites données sismiques à chacune desdites deux fenêtres inférieures, de sorte que « $D_{wk}$ » est défini comme des données segmentées qui sont mises en sourdine en dehors de la première fenêtre inférieure « $W_k$ », et que « $D_{wl}$ » est défini comme des données segmentées qui sont mises en sourdine en dehors de la seconde fenêtre inférieure « $W_l$ » ; et

affecter des parties desdites données sismiques audit ensemble de « $M$ » fenêtres supérieures, de sorte que « $D_{wj(N)}$ » est défini comme des données segmentées qui sont mises en sourdine en dehors de fenêtres respectives « $W_{j(N)}$ ».

**14.** Système selon la revendication 13, dans lequel, lorsque le processeur détermine un modèle de multiples 3D internes total, le processeur est en outre configuré de manière à :

générer de manière itérative ledit modèle de multiples 3D internes en tant que « $M(x_r, y_r|x_s, y_s;f)(N)$ » en utilisant lesdites données segmentées « $D_{wj(N)}$ », « $D_{wk}$ », et « $D_{wl}$ » ; et

additionner tous les modèles de multiples 3D internes générés de manière itérative, en vue de créer un modèle de multiples 3D internes total.

EP 2 755 058 B1

Figure 1

Figure 2

Figure 3

EP 2 755 058 B1

Figure 4

EP 2 755 058 B1

Figure 5

# Figure 6

# Figure 7

# Figure 8

EP 2 755 058 B1

Figure 9

EP 2 755 058 B1

## Figure 10A

## Figure 10B

## Figure 10C

EP 2 755 058 B1

# Figure 11A

# Figure 11B

# Figure 11C

EP 2 755 058 B1

# Figure 12A

```
                                                              ┌─102
┌────────────────────────────────────────────────────────────┐
│        Generate seismic source signal by source transmitters │
└────────────────────────────────────────────────────────────┘
                              │
                              ▼                               ┌─104
┌────────────────────────────────────────────────────────────┐
│                 Obtain raw data from receiver                │
└────────────────────────────────────────────────────────────┘
                              │
                              ▼                               ┌─106
┌────────────────────────────────────────────────────────────┐
│          Process raw data to suppress surface multiples      │
└────────────────────────────────────────────────────────────┘
                              │
                              ▼                               ┌─108
┌────────────────────────────────────────────────────────────┐
│          Define a plurality of M upper window, $W_{j(N)}$    │
└────────────────────────────────────────────────────────────┘
                              │
                              ▼                               ┌─110
┌────────────────────────────────────────────────────────────┐
│                          Set N=1                             │
└────────────────────────────────────────────────────────────┘
                              │
                              ▼                               ┌─112
┌────────────────────────────────────────────────────────────┐
│   Define two lower windows, $W_k$ and $W_l$; both of which are below $W_j$ │
└────────────────────────────────────────────────────────────┘
                              │
                              ▼                               ┌─114
┌────────────────────────────────────────────────────────────┐
│          Define a first aperture location and size with dimensions │
│      X1 (initial) to X1 (final) and Y1 (initial) to Y1 (final); and │
│          Define a second aperture location and size with dimensions │
│          X2 (initial) to X2 (final) and Y2 (initial) to Y2 (final) │
└────────────────────────────────────────────────────────────┘
                              │
                              ▼                               ┌─116
┌────────────────────────────────────────────────────────────┐
│   Allocate received data according to time of receipt, to each of the three │
│                          windows, such that                  │
│   $D_{wk}$ =segmented data that is muted off outside time window $W_k$; │
│   $D_{wj(N)}$ =segmented data that is muted off outside time window $W_{j(N)}$; and │
│   $D_{wl}$ =segmented data that is muted off outside time window $W_l$ . │
└────────────────────────────────────────────────────────────┘
                              │
                              ▼                               ┌─118
┌────────────────────────────────────────────────────────────┐
│  No    Does there exist a trace for $D_{wj(N)}$ at a receiver? │◄───
└────────────────────────────────────────────────────────────┘
         │                            │
         │                           Yes
         ▼                            │
┌────────────────────┐               │
│  Interpolate $D_{wj(N)}$ │──119     │
└────────────────────┘               │
         │                            │
         ▼                            ▼
   (to step 120)              (to step 120)         (from step 126)
```

# Figure 12B

(from step 119)  (from step 118)  (to step 118)

~120

Calculate Modified Equation (2) to determine $M(x_r,y_r|x_s,y_s;f)_{(N)}$

aperture 2 y value to y2 (initial value) ;
aperture 2 x value to x2 (initial value) ;
aperture 1 y value to y1 (initial value) ; and
aperture 1 x value to x1 (initial value) ; and then
iteratively incrementing, in turn, and
calculate $M(x_r,y_r/x_s,y_s;f)_{(N)}$ following each iteration,
X1 from its initial value to its final value,
Y1 from its initial value to its final value,
X2 from its initial value to its final value, and
Y2 from its initial value to its final value for each $W_{j(N)}$

Equation (2) [modified]:

$$M(x_r,y_r|x_s,y_s;f) = \sum_{w_j=1}^{w_n} \sum_{y_2}^{y^2_{aperture}} \sum_{x_2}^{x^2_{aperture}} \sum_{y_1}^{y^1_{aperture}} \sum_{x_1}^{x^1_{aperture}} D_{w_k}(x_1,y_1|x_r,y_r;f)$$

$$\otimes D^*_{w_j}(x_1,y_1|x_2,y_2;f) \otimes D_{w_l}(x_s,y_s|x_2,y_2;f)$$

~122

$M = M(x_r,y_r|x_s,y_s;f)_{(N)} + M(x_r,y_r|x_s,y_s;f)_{(N-1)}$

~124

Increment N to use a next upper window $W_{j(N)}$;$N = N + 1$

~126

Does N=M?  No

Yes  ~128

True Data=Raw Data + M

# Figure 13A

# Figure 13B

# Figure 13C

# FIG. 14

EP 2 755 058 B1

Figure 15

1500

1502
Positiong Surveying

1504
Seismic Energy Source

1506
Data Recording

1508
Data Processing

1510
Data Interpretation

Figure 16

EP 2 755 058 B1

Figure 17

EP 2 755 058 B1

Figure 18E

Figure 18B

Figure 18D

Figure 18A

Figure 18C

# Figure 19

Figure 20

EP 2 755 058 B1

Figure 21

EP 2 755 058 B1

# FIG. 22

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GRIFFITHS, M. et al.** Applications of Inter-Bed Multiple Attenuation. *The Leading Edge,* 2011, vol. 30, 906-912
- **LIN, D. et al.** SRME Practice for Better Imaging. *67th Conference & Technical Exhibition,* 2005
- **MOORE, I. et al.** 3D Surface-Related Multiple Prediction (SMP): A Case History. *The Leading Edge,* 2005, vol. 24, 270-274
- **RESHEF, M. et al.** 3D Prediction of Surface-Related and Inter-Bed Multiples. *Geophysics,* 2006, vol. 71 (1), V1-V6
- **PICA, A. et al.** Wave Equation Based Internal Multiple Modeling in 3D. *78th Meeting,* 2008
- **JAKUBOWICZ, H.** Wave Equation Prediction and Removal of Inter-Bed Multiple. *68th Meeting,* 1998
- **WEGLEIN, A. B. et al.** An Inverse-Scattering Series Method for Attenuating Multiples in Seismic Reflection Data. *Geophysics,* 1997, vol. 62, 1975-1989

- **VERSCHUUR, D.J. et al.** Removal of Internal Multiples with the Common-Focus-Point (CFP) Approach: Part 2 - Application Strategies and Data Examples. *Geophysics,* 2005, vol. 70, V61-V72
- **HUNG, B. et al.** Internal De-multiple Methodology Without Identifying the Multiple Generators. *82nd Meeting,* 2012
- **RETAILLEAU, M.G. et al.** Advanced 3D Land Internal Multiple Modeling and Subtraction, a WAZ Oman Case Study. *73rd Conference & Technical Exhibition,* 2011
- **ZHIMING JAMES WU et al.** Robust internal multiple prediction algorithm. *SEG San Antonio 2011 Annual Meeting,* 2011, 3541-3545
- **HUNG, B.** Internal De-multiple Methodology Without Identifying the Multiple Generators. *82nd Meeting,* 2012